# EUROPEAN PATENT SPECIFICATION

(11) **EP 4 418 733 B1**
(45) Date of publication and mention of the grant of the patent: **17.09.2025**
(21) Application number: 22920040.7
(22) Date of filing: 20.12.2022
(51) Int. Cl.: H04W 36/00, H04W 76/18, H04W 76/19, H04W 76/22, H04W 76/27, H04W 76/30

(54) **DATA TRANSMISSION METHODS**
DATENÜBERTRAGUNGSVERFAHREN
PROCÉDÉS DE TRANSMISSION DE DONNÉES

(30) Priority: 14.01.2022 CN 202210043783
(43) Date of publication of application: 21.08.2024
(60) Divisional application: 25195707.2
(73) Proprietor: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2022/140483
(87) International publication number: WO 2023/134409

(56) References cited:
- WO-A1-2021/189462
- WO-A1-2021/228197
- HUAWEI, HISILICON: "Control plane common aspects for SDT", 3GPP TSG-RAN WG2 #113BIS-E, R2-2103904, 2 April 2021 (2021-04-02), XP052175226
- NOKIA, NOKIA SHANGHAI BELL: "(TP for TS 38.423) Support of RACH-based SDT", 3GPP TSG-RAN WG3#114BIS-E, R3-220203, 6 January 2022 (2022-01-06), XP052098804

## Description

This application claims priority to Chinese Patent Application No. 202210043783.6, filed with the China National Intellectual Property Administration on January 14, 2022 and entitled "DATA TRANSMISSION METHOD, APPARATUS, AND SYSTEM".

### TECHNICAL FIELD

The present invention relates to the field of communication technologies, and in particular, to data transmission methods.

### BACKGROUND

In a 5th generation new radio (5th generation new radio, 5G NR) system, an RRC inactive (RRC_INACTIVE) state is introduced at a radio resource control (radio resource control, RRC) layer. User equipment (user equipment, UE) may be in the RRC inactive state when there is no data transmission. When the UE has data transmission, the UE may switch from the RRC inactive state to an RRC connected (RRC_CONNECTED) state to perform data transmission.

In some transmission scenarios, although a data packet transmitted by the UE is very small, the data packet is transmitted frequently, resulting in that the UE needs to frequently perform RRC state switching. Therefore, a large amount of signaling resources are occupied. However, occupying a large amount of signaling resources to transmit a small data packet results in a waste of signaling resources. To resolve this problem, a small data transmission (small data transmission, SDT) technology is proposed in the conventional technology, based on which the UE can transmit data in the RRC inactive state.
Huawei, HiSilicon: "Control plane common aspects for SDT", 3GPP TSG-RAN WG2 #113BIS-E, R2-2103904, 2 April 2021, discusses Small Data Transmission (SDT) management in 5G networks, focusing on control plane aspects. It addresses the handling of SDT within radio access networks (RAN) and explores mechanisms for efficient signaling and resource allocation.

### SUMMARY

An object of the present invention is to provide a data transmission method and provide a processing solution used when a serving base station or an anchor base station does not meet an SDT requirement, for example, when resource congestion occurs on the serving base station or the anchor base station is overloaded. The present invention does not limit a reason why the serving base station or the anchor base station does not meet a requirement for performing SDT. The foregoing object is solved by the subject-matter of the appended independent claims, wherein further embodiments are set out in the dependent claims.

Further, the following technical solutions are used in this application.

According to a first aspect, a data transmission method is provided. The data transmission method may be applied to a serving access network device, and the data transmission method may include: first, receiving a first RRC message from a terminal device, where the first RRC message is used to establish SDT; and sending a second RRC message or a third RRC message to the terminal device, where the second RRC message may be used to indicate the terminal device to terminate the SDT, and the third RRC message may be used to indicate the serving access network device to reject performing the SDT.

Based on this solution, once the serving access network device does not meet the requirement for performing the SDT, the SDT may be rejected or terminated in time, so that the terminal device can subsequently reselect a cell to initiate SDT again. Compared with a solution in which the terminal device continues to wait in a current cell, delay can be reduced, and data transmission efficiency of the terminal device can be improved.

With reference to the first aspect, in a possible implementation, that the serving access network device does not meet a requirement of the SDT may include: When the first RRC message is received, the serving access network device does not support the SDT, congestion occurs on the serving access network device, or load of the serving access network device is greater than a threshold.

With reference to the first aspect, in a possible implementation, that the serving access network device does not meet a requirement of the SDT may include: In a process of performing the SDT, congestion occurs on the serving access network device or the load of the serving access network device is greater than the threshold.

Based on the two implementations described above, when the SDT is requested to be established or in the process of performing the SDT, a subsequent SDT procedure can be terminated or rejected once the serving access network device does not meet the requirement of the SDT, thereby improving applicability and flexibility of the solution.

With reference to the first aspect, in a possible implementation, the second RRC message and the third RRC message each include a wait time, and the wait time indicates duration that the terminal device waits before initiating a next communication connection.

Based on this solution, it can be avoided that if the terminal device, after initiating a communication connection immediately, selects the current cell again, SDT fails again.

With reference to the first aspect, in a possible implementation, the second RRC message includes a first redirection parameter or a first cell reselection priority parameter, the first redirection parameter is used for redirection, and the first cell reselection priority parameter is used for cell reselection.

Based on this solution, the serving access network device, while indicating the terminal device to terminate SDT transmission, may also provide the terminal device with the parameter for redirection or cell reselection, so that the terminal device can reselect a cell according to the indication of the serving access network device. This solution may enable the terminal device to select a more suitable cell for SDT or initiation of another service, which may improve data transmission efficiency of the terminal device.

With reference to the first aspect, in a possible implementation, the second RRC message includes a suspend configuration, and the suspend configuration is used to indicate the terminal device to suspend a context of the terminal device.

With reference to the first aspect, in a possible implementation, the serving access network device is not an anchor access network device, and before the sending a second RRC message to the terminal device, the data transmission method may further include: sending a fourth RRC message to the anchor access network device, where the fourth RRC message is used to request the anchor access network device to send the second RRC message; and receiving a fifth RRC message from the anchor access network device, where the fifth RRC message is a response message of the fourth RRC message, and the fifth RRC message includes the second RRC message. It can be learned that the second RRC message used to indicate the terminal device to terminate the SDT is generated by the anchor access network device.

With reference to the first aspect, in a possible implementation, the fourth RRC message includes any one of the following: a request indication, a redirection indication, or a cell reselection indication, where the request indication is used to request the anchor access network device to send the second RRC message, the redirection indication is used to indicate the serving access network device to recommend the terminal device to perform redirection, and the cell reselection indication is used to indicate the serving access network device to recommend the terminal device to perform cell reselection.

Based on this solution, the serving access network device, when requesting the anchor access network device to send the second RRC message for terminating the SDT, may further recommend the terminal device to the anchor access network device to perform redirection. Therefore, the terminal device may select a more suitable cell to perform SDT, thereby improving data transmission efficiency of the terminal device.

With reference to the first aspect, in a possible implementation, when the second RRC message includes the first redirection parameter, the fourth RRC message includes a second redirection parameter, where the second redirection parameter is used to determine the first redirection parameter. When the second RRC message includes the first cell reselection priority parameter, the fourth RRC message includes a second cell reselection priority parameter, where the second cell reselection priority parameter is used to determine the first cell reselection priority parameter.

Based on this solution, a parameter indicating the terminal device to perform redirection or cell reselection may be recommended by the serving access network device.

With reference to the first aspect, in a possible implementation, the fourth RRC message includes a wait time indication and/or a first cause value, where the wait time indication is used to indicate the anchor access network device to send a wait time, and the first cause value indicates a reason why the serving access network device requests the anchor access network device to send the second RRC message.

With reference to the first aspect, in a possible implementation, if it is determined that the serving access network device does not meet the requirement of the SDT when receiving the first RRC message, the fourth RRC message may include a transmission indication, where the transmission indication is used to indicate the terminal device to request to perform SDT.

With reference to the first aspect, in a possible implementation, if it is determined that the serving access network device does not meet the requirement of the SDT in the process of performing the SDT, the fifth RRC message may be further used to indicate the serving access network device to delete the context of the terminal device. The data transmission method may further include: deleting the locally stored context of the terminal device.

With reference to the first aspect, in a possible implementation, the first RRC message includes a first SDT data packet. If the serving access network device does not meet the requirement of the SDT when the first RRC message is received, the fourth RRC message further includes the first SDT data packet.

Based on this solution, even if it is determined to terminate or reject the SDT, a data packet that has been sent by the terminal device is not discarded, to avoid a waste of signaling resources.

With reference to the first aspect, in a possible implementation, if it is determined that the serving access network device does not meet the requirement of the SDT in the process of performing the SDT, after the sending a third RRC message to the terminal device, the data transmission method may further include: sending a sixth RRC message to an anchor access network device, where the sixth RRC message is used to indicate the anchor access network device to cancel the SDT.

With reference to the first aspect, in a possible implementation, the sixth RRC message further includes a second cause value, and the second cause value is used to indicate a reason for canceling the SDT.

According to a second aspect, a data transmission method is provided. The data transmission method may be applied to an anchor access network device, and the data transmission method may include: first, receiving a fourth RRC message from a serving access network device, where the fourth RRC message is used to request the anchor access network device to send a second RRC message; and then, sending a fifth RRC message to the serving access network device based on the fourth RRC message, where the fifth RRC message includes a second RRC message, and the second RRC message is used to indicate a terminal device to terminate SDT.

Based on this solution, when the serving access network device does not meet a requirement of the SDT, the serving access network device may request the anchor access network device to send the second RRC, so that the serving access network device forwards the second RRC message to the terminal device, to indicate the terminal device to terminate the SDT. When the serving access network device does not meet the requirement of the SDT, the SDT is terminated in time, to prevent the terminal device from continuing to wait in a cell of the serving access network device. In this solution, a delay of the SDT can be reduced, and data transmission efficiency of the terminal device can be improved.

With reference to the second aspect, in a possible implementation, the fourth RRC message includes any one of the following: a request indication, a redirection indication, or a cell reselection indication, where the request indication is used to request the anchor access network device to send the second RRC message, the redirection indication is used to indicate the serving access network device to recommend the terminal device to perform redirection, and the cell reselection indication is used to indicate the serving access network device to recommend the terminal device to perform cell reselection. The data transmission method may further include: determining, according to the request indication, the redirection indication, or the cell reselection indication, that the fifth RRC message includes the second RRC message.

Based on this solution, the serving access network device may explicitly (for example, by using the request indication) request the anchor access network device to terminate the SDT, or may implicitly (for example, by using the redirection indication or the cell reselection indication) request the anchor access network device to terminate the SDT, thereby improving flexibility of the solution in this application.

With reference to the second aspect, in a possible implementation, the second RRC message includes a first redirection parameter or a first cell reselection priority parameter, the first redirection parameter is used for redirection, and the first cell reselection priority parameter is used for cell reselection.

With reference to the second aspect, in a possible implementation, when the second RRC message includes the first redirection parameter, the fourth RRC message further includes a second redirection parameter, and the data transmission method further includes: determining the first redirection parameter based on the second redirection parameter. When the second RRC message includes the first cell reselection priority parameter, the fourth RRC message further includes a second cell reselection priority parameter, and the data transmission method further includes: determining the first cell reselection priority parameter based on the second cell reselection priority parameter.

Based on this solution, the anchor access network device may determine, based on a redirection parameter or cell reselection priority parameter recommended by the serving access network device, a parameter used by the terminal device to perform redirection or cell reselection.

With reference to the second aspect, in a possible implementation, the second RRC message includes a wait time, and the wait time indicates duration that the terminal device waits before initiating a next communication connection.

With reference to the second aspect, in a possible implementation, the fourth RRC message may further include a wait time indication, and the data transmission method further includes: determining the wait time according to the wait time indication.

With reference to the second aspect, in a possible implementation, the fourth RRC message further includes a first cause value, and the first cause value indicates a reason why the serving access network device requests the anchor access network device to send the second RRC message.

With reference to the second aspect, in a possible implementation, the fourth RRC message further includes a transmission indication, and the transmission indication is used to indicate the terminal device to request to perform SDT.

With reference to the second aspect, in a possible implementation, the fourth RRC message further includes a first SDT data packet. The data transmission method may further include: sending the first SDT data packet to a user plane network element. Based on this solution, even if the terminal device has been indicated to terminate the SDT, a data packet that has been sent is normally forwarded to the user plane network element, to prevent the first data packet from being discarded and causing a waste of signaling resources.

With reference to the second aspect, in a possible implementation, the fifth RRC message is further used to indicate the serving access network device to delete a context of the terminal device.

According to a third aspect, a data transmission method is provided. The data transmission method may be applied to an anchor access network device, and the data transmission method may include: first, receiving a sixth RRC message from a serving access network device, where the sixth RRC message is used to indicate the anchor access network device to cancel SDT; and suspending, based on the sixth RRC message, a context of a terminal device that performs SDT.

Based on this solution, when the serving access network device does not meet a requirement of the SDT, the serving access network device may indicate the anchor access network device to cancel subsequent SDT. It can be learned that there is more than one manner of terminating the SDT. This solution improves flexibility of the data transmission method in this application.

With reference to the third aspect, in a possible implementation, the sixth RRC message further includes a second cause value, and the second cause value is used to indicate a reason for canceling the SDT.

According to a fourth aspect, a data transmission method is provided. The data transmission method may be applied to an anchor access network device, and the data transmission method may include: first, determining to terminate SDT; and then, sending a seventh RRC message to a serving access network device, where the seventh RRC message includes a second RRC message, and the second RRC message is used to indicate a terminal device to terminate the SDT.

Based on this solution, the anchor access network device may alternatively actively terminate the SDT, thereby improving flexibility of the data transmission method in this application.

With reference to the fourth aspect, in a possible implementation, the second RRC message includes a first redirection parameter or a first cell reselection priority parameter, the first redirection parameter is used for redirection, and the first cell reselection priority parameter is used for cell reselection.

With reference to the fourth aspect, in a possible implementation, the second RRC message includes a wait time, and the wait time indicates duration that the terminal device waits before initiating a next communication connection.

According to a fifth aspect, a data transmission method is provided. The data transmission method may be applied to a terminal device, and the data transmission method may include: first, sending a first RRC message to a serving access network device, where the first RRC message is used to establish SDT; and stopping, by the terminal device, an SDT timer when a second RRC message or a third RRC message from the serving access network device is received, where the second RRC message is used to indicate the terminal device to terminate the SDT, and the third RRC message is used to indicate the serving access network device to reject performing the SDT.

Based on this solution, the terminal device may initiate SDT by using the first RRC message. In addition, after initiating the SDT, the terminal device may stop the SDT timer if the terminal device receives an indication indicating to terminate the SDT or indicating that the access network device rejects performing the SDT. This method may avoid a long data transmission delay caused by a long-time wait of the terminal device in a specific cell.

With reference to the fifth aspect, in a possible implementation, the second RRC message is an RRC release message and the third RRC message is an RRC reject message.

With reference to the fifth aspect, in a possible implementation, when the third RRC message is received, the data transmission method may further include: notifying an upper layer of an SDT failure, and restarting an RNA timer, where the RNA timer is used to indicate that the terminal device is in an RRC inactive state.

With reference to the fifth aspect, in a possible implementation, when the second RRC message is received, the data transmission method may further include: notifying an upper layer of an SDT termination.

With reference to the fifth aspect, in a possible implementation, the second RRC message may include a suspend configuration, and the data transmission method may further include: suspending a context of the terminal device, and restarting an RNA timer.

With reference to the fifth aspect, in a possible implementation, after the terminal device sends the first RRC message, the method further includes: starting the SDT timer, and stopping the RNA timer.

With reference to the fifth aspect, in a possible implementation, when the third RRC message is received, the data transmission method may further include: notifying the upper layer of an SDT failure, and continuing to run a suspended RNA timer, where the RNA timer is used to indicate that the terminal device is in an RRC inactive state.

With reference to the fifth aspect, in a possible implementation, when the second RRC message is received, the data transmission method may further include: notifying an upper layer of an SDT termination.

With reference to the fifth aspect, in a possible implementation, the second RRC message may include a suspend configuration, and the data transmission method may further include: suspending a context of the terminal device, and continuing to run the suspended RNA timer.

With reference to the fifth aspect, in a possible implementation, after the terminal device sends the first RRC message, the method further includes: starting the SDT timer, and suspending the RNA timer.

With reference to the fifth aspect, in a possible implementation, the second RRC message or the third RRC message includes a wait time, and the wait time indicates duration that the terminal device waits before initiating a next communication connection.

Based on this solution, it can be avoided that if the terminal device, after initiating a communication connection immediately, selects the current cell again, SDT fails again.

With reference to the fifth aspect, in a possible implementation, the second RRC message includes a first redirection parameter, and the first redirection parameter is used for redirection. Based on this solution, the serving access network device, while indicating the terminal device to terminate SDT transmission, may also provide the terminal device with a parameter for redirection or cell reselection, so that the terminal device can reselect a cell according to the indication of the serving access network device.

Based on this solution, the terminal device can select a more suitable cell to perform SDT, and data transmission efficiency for the terminal device to perform SDT can be improved.

With reference to the fifth aspect, in a possible implementation, if there is an unsent SDT data packet in a buffer of the terminal device, the data transmission method may further include: ignoring the wait time, performing redirection based on the first redirection parameter, and triggering SDT in a first cell to send the unsent SDT data packet in the buffer, where the first cell is a serving cell after the terminal device performs the redirection.

Based on this solution, when there is an SDT data packet that has not been fully transmitted, redirection may be immediately performed without regard for the wait time, and the redirection is performed based on the first redirection parameter sent by the access network device, to ensure that SDT initiated by the terminal device in a new cell can be successfully performed. This method can reduce a delay of SDT and enable a to-be-sent SDT data packet to be sent out in time.

With reference to the fifth aspect, in a possible implementation, the second RRC message includes a first cell reselection priority parameter, and the first cell reselection priority parameter is used for cell reselection.

Based on this solution, the terminal device can select a more suitable cell to perform SDT, and data transmission efficiency for the terminal device to perform SDT can be improved.

With reference to the fifth aspect, in a possible implementation, if there is an unsent SDT data packet in a buffer of the terminal device, the data transmission method may further include: ignoring the wait time, performing cell reselection based on the first cell reselection priority parameter, and triggering SDT in a second cell to send the unsent SDT data packet in the buffer, where the second cell is a serving cell after cell reselection is performed.

Based on this solution, when there is an SDT data packet that has not been fully transmitted, cell reselection may be immediately performed without regard for the wait time, and the cell reselection is performed based on the first cell reselection priority parameter sent by the access network device, to ensure that SDT initiated by the terminal device in a new cell can be successfully performed. This method can reduce a delay of SDT and enable a to-be-sent SDT data packet to be sent out in time.

According to a sixth aspect, which is not covered by the claims, a communication apparatus is provided to implement the foregoing methods. The communication apparatus may be the serving access network device in the first aspect, or may be the anchor access network device in the second aspect to the fourth aspects, or may be the terminal device in the fifth aspect. The communication apparatus may include a corresponding module, unit, or means (means) for implementing the methods described above. The module, unit, or means may be implemented by hardware, implemented by software, or implemented by hardware executing corresponding software. The hardware or the software includes one or more modules or units corresponding to the foregoing functions.

In a possible implementation, the communication apparatus includes a processing module and a transceiver module. The transceiver module is configured to perform message receiving and sending operations by a communication apparatus side in the method of the first aspect, the second aspect, the third aspect, the fourth aspect, or the fifth aspect. The processing module is configured to invoke instructions to perform a message processing or control operation performed by the communication apparatus side in the method of the first aspect, the second aspect, the third aspect, the fourth aspect, or the fifth aspect.

According to a seventh aspect, which is not covered by the claims, a communication apparatus is provided, including: a processor, where the processor is configured to be coupled to a memory, and after reading computer instructions stored in the memory, perform the method according to the first aspect, the second aspect, the third aspect, the fourth aspect, or the fifth aspect according to the computer instructions.

In a possible implementation, the communication apparatus further includes the memory, where the memory is configured to store the computer instructions.

In a possible implementation, the communication apparatus further includes a communication interface, where the communication interface is used by the communication apparatus to communicate with another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is a chip system, the communication apparatus may include a chip, or may include a chip and another discrete component.

In a possible implementation, when the communication apparatus is a chip or a chip system, the foregoing communication interface may be an input/output interface, an interface circuit, an output circuit, an input circuit, a pin, a related circuit, or the like on the chip or the chip system. The processor may also be embodied as a processing circuit or a logic circuit.

According to an eighth aspect, which is not covered by the claims, a computer-readable storage medium is provided. The computer-readable storage medium stores instructions. When the instructions are run on a computer, the computer is enabled to perform the method according to the first aspect, the second aspect, the third aspect, the fourth aspect, or the fifth aspect.

According to a ninth aspect, which is not covered by the claims, a computer program product including instructions is provided. When the computer program product is run on a computer, the computer is enabled to perform the method according to the first aspect, the second aspect, the third aspect, the fourth aspect, or the fifth aspect.

According to a tenth aspect, which is not covered by the claims, a communication system is provided. The communication system includes a generator for performing the data transmission method according to the first aspect, an updater for performing the data transmission method according to the second aspect, and an updater for performing the data transmission method according to the third aspect.

For technical effects brought by any implementation in the sixth aspect to the tenth aspect, refer to the technical effects brought by different implementations in the first aspect, the second aspect, the third aspect, the fourth aspect, or the fifth aspect. Details are not described herein again.

### BRIEF DESCRIPTION OF DRAWINGS

FIG. 1 is a diagram of a communication network architecture according to an embodiment of this application;
FIG. 2 is a schematic diagram of an interaction process in which UE requests to resume an RRC connection according to an embodiment of this application;
FIG. 3 is a flowchart of SDT according to an embodiment of this application;
FIG. 4 is another flowchart of SDT according to an embodiment of this application;
FIG. 5 is a schematic diagram of a structure of a communication system according to an example of this application;
FIG. 6 is a schematic diagram of a structure of another communication system according to an example of this application;
FIG. 7 is a schematic diagram of a structure of a communication device according to an example of this application;
FIG. 8 is a schematic diagram of a hardware structure of UE according to an example of this application;
FIG. 9 is a flowchart of a data transmission method according to an embodiment of this application;
FIG. 10a is a flowchart of a data transmission method according to an embodiment of this application when a serving access network device and an anchor access network device are a same access network device;
FIG. 10b is a flowchart of a specific implementation of the data transmission method shown in FIG. 10a;
FIG. 11a is a flowchart of another data transmission method according to an embodiment of this application when a serving access network device and an anchor access network device are a same access network device;
FIG. 11b is a flowchart of a specific implementation of the data transmission method shown in FIG. 11a;
FIG. 12a is a flowchart of a data transmission method according to an embodiment of this application when a serving access network device is different from an anchor access network device;
FIG. 12b is a flowchart of a specific implementation of the data transmission method shown in FIG. 12a;
FIG. 13a is a flowchart of a data transmission method according to an embodiment of this application when a serving access network device is different from an anchor access network device;
FIG. 13b is a flowchart of a specific implementation of the data transmission method shown in FIG. 13a;
FIG. 14a is a flowchart of a data transmission method according to an embodiment of this application when a serving access network device is different from an anchor access network device;
FIG. 14b is a flowchart of a specific implementation of the data transmission method shown in FIG. 14a;
FIG. 15a is a flowchart of a data transmission method according to an embodiment of this application when a serving access network device is different from an anchor access network device;
FIG. 15b is a flowchart of a specific implementation of the data transmission method shown in FIG. 15a;
FIG. 16a is a flowchart of a data transmission method according to an embodiment of this application when a serving access network device is different from an anchor access network device;
FIG. 16b is a flowchart of a specific implementation of the data transmission method shown in FIG. 16a;
FIG. 17 is a flowchart of establishing, by a serving access network device and an anchor access network device, a transmission link for SDT according to an embodiment of this application;
FIG. 18 is a flowchart of a data transmission method according to an embodiment of this application; and
FIG. 19 is a schematic diagram of a structure of a communication apparatus according to an example of this application.

### DESCRIPTION OF EMBODIMENTS

Technical solutions in embodiments of this application are described below with reference to the accompanying drawings in the embodiments of this application. In the description of this application, unless otherwise specified, "/" indicates an "or" relationship between associated objects. For example, A/B may indicate A or B. In this specification, "and/or" describes only an association relationship between associated objects and indicates that three relationships may exist. For example, A and/or B may indicate the following three cases: only A exists, both A and B exist, and only B exists, where A and B may be singular or plural. In addition, in the description of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be singular or plural. In addition, to clearly describe the technical solutions in the embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference. Moreover, in embodiments of this application, terms such as "exemplary" and "for example" are used for to represent an example, an instance, or an illustration. Any embodiment or design solution described by using "exemplary" or "for example" in embodiments of this application should not be explained as being more preferred or having more advantages than another embodiment or design solution. In particular, the terms such as "exemplary" or "for example" are intended to present a related concept in a specific manner to facilitate understanding.

To facilitate understanding, the following briefly describes some terms and a related technology in this application.

### 1. 5th generation (5th generation, 5G) network architecture:

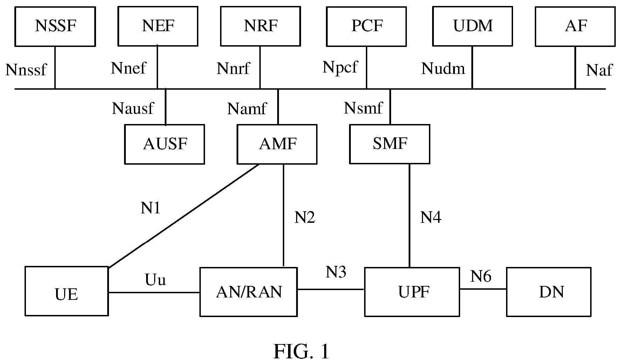

Refer to FIG. 1. FIG. 1 is a schematic diagram of a 5G network architecture. FIG. 1 shows an interaction relationship and a corresponding interface between a network function and an entity by using a network service architecture of a 5G system as an example. Network functions and entities included in a 3rd generation partnership project (the 3rd generation partnership project, 3GPP) service-based architecture (service-based architecture, SBA) of the 5G system mainly include: user equipment (user equipment, UE), an access network (access network, AN) or a radio access network (radio access network, RAN), a user plane function (user plane function, UPF), a data network (data network, DN), an access management function (access management function, AMF), a session management function (session management function, SMF), an authentication server function (authentication server function, AUSF), a policy control function (policy control function, PCF), an application function (application function, AF), a network slice selection function (network slice selection function, NSSF), unified data management (unified data management, UDM), a network exposure function (network exposure function, NEF), and a network repository function (network repository function, NRF).

The network function can be used as a network element that runs on dedicated hardware, a software instance that runs on dedicated hardware, or a virtual function that is instantiated on an appropriate platform, for example, implemented on cloud infrastructure.

The main functions of the network elements are described below in detail.

AN/RAN: The AN/RAN may include a base station in any of various forms, for example, a macro base station, a micro base station (also referred to as a "small cell"), a distributed unit-control unit (distribute unit-control unit, DU-CU), or the like. In addition, the base station may alternatively be a radio controller in a cloud radio access network (cloud radio access network, CRAN) scenario, a relay station, an access point, an in-vehicle device, a wearable device, a network device in a future evolved public land mobile network (public land mobile network, PLMN) network, or the like. The AN/RAN may alternatively include a broadband network service gateway (broadband network gateway, BNG), a convergence switch, a non-3GPP access device, or the like.

The AN/RAN is mainly responsible for functions such as radio resource management on an air interface side, uplink and downlink data classification, quality of service (quality of service, QoS) management, data compression and encryption, completion of signaling processing with a control plane network element, or completion of data forwarding with a user plane function network element. The specific form and structure of the AN/RAN are not limited in the embodiments of this application. For example, in systems using different radio access technologies, names of devices having base station functions may be different. For example, the base station may be an evolved universal terrestrial radio access network (evolved universal terrestrial radio access network, E-UTRAN) device such as an evolved NodeB (Evolutional NodeB, eNB, or e-NodeB) in LTE, or may be a next generation radio access network (next generation radio access network, NG-RAN) device (such as a gNB) in the 5G system.

UPF: The UPF is mainly responsible for packet routing and forwarding, QoS processing of user plane data, charging information statistics, and the like. A transmission resource and a scheduling function for providing a service to the UE in the UPF are managed and controlled by the SMF.

DN: The DN is a network for data transmission. For example, the DU may be an operator service network, internet access network, or a third-party service network.

For descriptions about the functions and the like of the AUSF, the NSSF, the NEF, the NRF, the UDM, and the other network elements, refer to explanations and descriptions in the conventional technology. Details are not described herein.

### 2. Radio resource control (radio resource control, RRC) states:

Three RRC states are defined in 5G NR: an inactive state, a connected state, and an idle (IDLE) state. The three states are described as follows:
(1). Connected state: that is, an RRC_CONNECTED state, also referred to as a connection state. The connected state means that an RRC connection between UE and an access network is established. When the UE is in the connected state, a connection between the UE and the access network (for example, a base station) and a connection between the UE and a core network (for example, an AMF unit) are established, when data needs to be transmitted, the data is transmitted directly through the established connections. The RRC connection is used to process a control plane message between the UE and the access network.
(2). Inactive state: that is, an RRC_INACTIVE state, also referred to as a deactivated state or a third state. The inactive state means that an RRC connection between UE and an access network (for example, a base station) is disconnected, but a connection between the access network (for example, the base station) corresponding to the UE and a core network (for example, an AMF) remains connected. In the conventional technology, when the UE is in the deactivated state, if data needs to be transmitted, the RRC connection between the UE and the access network (for example, the base station) needs to be first resumed, and then the data can be transmitted.

After the UE enters the inactive state, a context (context) of the UE is suspended (suspend) on a terminal side and a base station side, and the context of the UE is stored in a last cell in which the UE resides before entering the inactive state, or stored in a last cell (also referred to as an anchor cell) that serves the UE. When there is a data and/or signaling transmission requirement, the UE may obtain the context of the UE by initiating an RRC resume request (RRCResumeRequest), to resume the RRC connection based on the context of the UE. For example, the context of the UE includes: security context of the UE or capability information of the UE.

(3). Idle state: that is, RRC_IDLE. The idle state means that no RRC connection is established between UE and an access network device (for example, a base station) and no connection is established between the access network device (for example, the base station) corresponding to the UE and a core network device (for example, an AMF). When the UE is in the idle state, if data needs to be transmitted, a connection between the UE and the access network device (for example, the base station) and a connection between the access network device (for example, the base station) and the core network device (for example, the AMF) need to be first established, and then the data can be transmitted.

In addition, a base station to which a cell in which the UE currently resides belongs or a base station that currently serves the UE may be referred to as a serving base station. A base station to which a last cell in which the UE resides before entering an inactive state belongs or a last base station that serves the UE before the UE enters an inactive state may be referred to as an anchor base station. It should be noted that the UE has mobility, and the UE may move after entering the inactive state, resulting in that a serving base station of the UE may be different from an anchor base station of the UE.

### 3. Switching from an RRC inactive state to an RRC connected state:

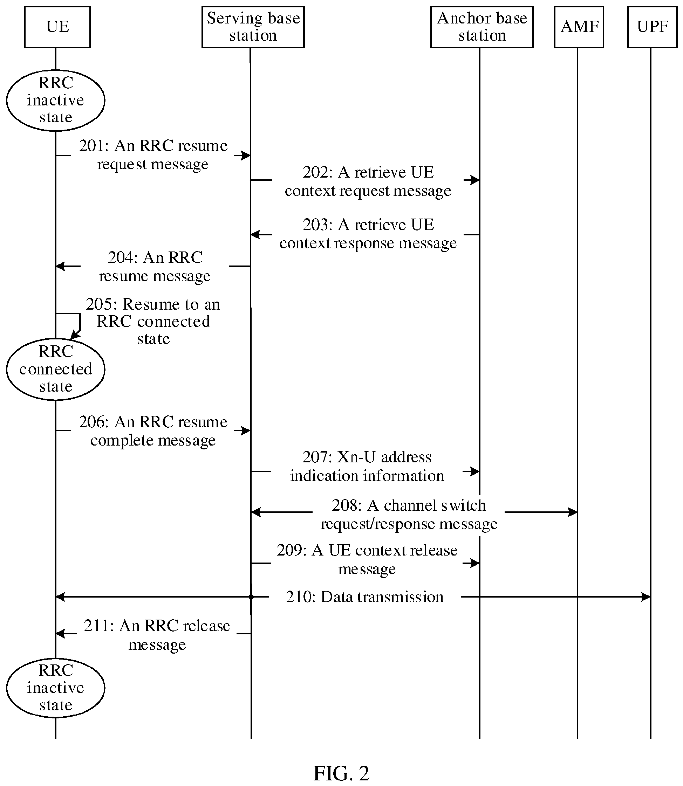

In the conventional technology, if UE needs to transmit data in the RRC inactive state, the UE may first switch to the RRC connected state before transmitting data and/or signaling. For example, FIG. 2 shows a complete procedure of switching from an RRC inactive state to an RRC connected state. As shown in FIG. 2, the switching procedure may include the following steps.

Step 201: UE in the RRC inactive state sends an RRC resume request (RRCResumeRequest) message to a serving base station.

Step 202: If the serving base station of the UE is not an anchor base station of the UE, the serving base station sends a retrieve UE context request (Retrieve UE CONTEXT REQUEST) message to the anchor base station, to request a context of the UE.

Step 203: The anchor base station sends a retrieve UE context response (Retrieve UE CONTEXT RSPONSE) message to the serving base station, where the message includes the context of the UE.

Step 204: After receiving the retrieve UE context response message, the serving base station sends an RRC resume (RRCResume) message to the UE, to enable the UE to switch to the RRC connected state.

Step 205: The UE switches to the RRC connected state after receiving the RRC resume message.

Step 206: The UE sends an RRC resume complete (RRCResumeComplete) message to the serving base station after resuming to the RRC connected state.

Step 207: The serving base station sends Xn interface address indication (Xn-U address indication) information to the anchor base station after receiving the RRC resume complete message.

Step 208: The serving base station sends a channel switch request (path switch request) message to an AMF, and receives a channel switch response (path switch response) message, to perform channel switching to switch a channel of a core network device to the serving base station.

Step 209: After the channel switching, the serving base station sends a UE context release (UE context release) message to the anchor base station, to indicate the anchor base station to release the context of the UE.

It should be understood that after step 208, the serving base station becomes a new anchor base station. Therefore, the original anchor base station (that is, the anchor base station in FIG. 2) does not need to preserve the context of the UE, and the context of the UE can be released.

Step 210: After the channel switching, the UE in the RRC connected state may perform data transmission with a UPF.

Step 211: After data transmission is complete, the serving base station (which is also an anchor base station) may send an RRC release (RRCRelease) message to the UE, to enable the UE to switch to the RRC inactive state.

The RRC release message may include a suspend configuration (suspendconfig), which is used to indicate the UE to suspend the context of the UE.

If the UE resumed to the inactive state needs to transmit data again, the foregoing step 201 to step 211 may be performed again.

However, it can be learned from the foregoing steps 201 to 211 that if a quantity of times of data transmission is relatively frequent, the UE needs to frequently switch between the inactive state and the connected state, thereby occupying a large quantity of signaling resources. However, occupying a large amount of signaling resources to transmit a small data packet results in a waste of signaling resources. Therefore, in a possible implementation, a small data transmission (small data transmission, SDT) technology is proposed, which enables the UE to transmit data in the RRC inactive state.

### 4. SDT:

SDT may be performed by UE in an inactive state in two scenarios: an anchor migration scenario and an anchor non-migration scenario. Anchor migration means that when the UE requests to perform SDT in the inactive state, a solution similar to the foregoing step 206 to step 208 may be executed, to switch the channel of the AMF to a current serving base station, and after the current serving base station becomes an anchor base station (that is, migration of the anchor base station), data transmission is performed. Anchor non-migration means that a previous anchor base station is still used to control data transmission without switching the channel of the AMF to the current serving base station.

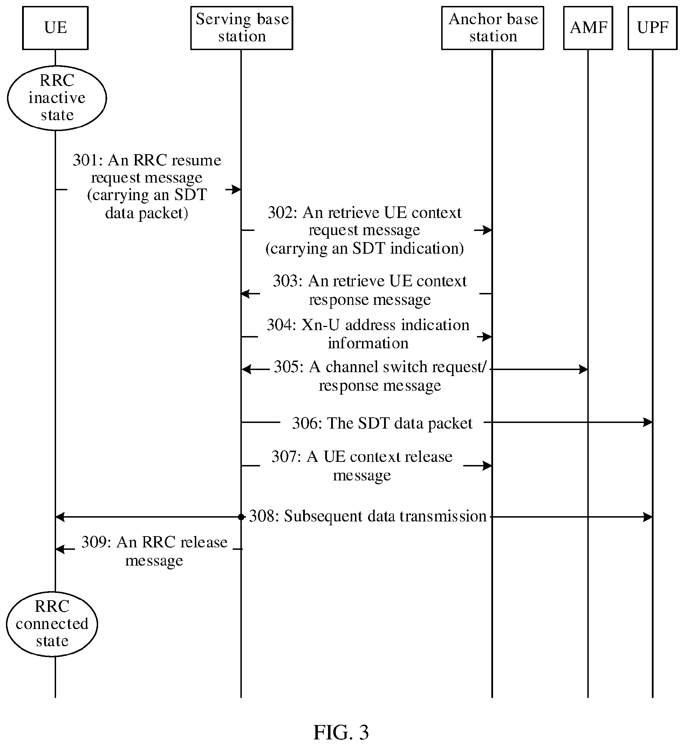

For example, FIG. 3 is a flowchart of performing SDT in an anchor migration scenario. As shown in FIG. 3, the process may include the following steps:
Step 301: UE in an RRC inactive state carries an SDT data packet in an RRC resume request message sent to a serving base station, where the RRC resume request message that carries the SDT data packet may be used to request to perform SDT.
Step 302: If the serving base station of the UE is not an anchor base station of the UE, the serving base station sends a retrieve UE context request message, where the retrieve UE context request message may include an SDT indication, to the anchor base station to indicate the anchor base station to perform SDT.
Step 303: The anchor base station sends a retrieve UE context response message to the serving base station.
Step 304: The serving base station sends Xn interface address indication information to the anchor base station after receiving the retrieve UE context response message.
Step 305: The serving base station sends a channel switch request message to an AMF, and receives a channel switch response message, to perform channel switching to switch a channel of a core network device to the serving base station.
Step 306: After the channel switching, the serving base station directly sends, to an UPF, the SDT data packet carried in the RRC resume request message by the UE.
Step 307: After the channel switching, the serving base station further sends a UE context release message to the anchor base station, to indicate the anchor base station to release a context of the UE.
Step 308: After the channel switching, the UE performs transmission of subsequent SDT data packets with the UPF through the serving base station.
Step 309: After data transmission is complete, the serving base station (which is also an anchor base station) sends an RRC release message to the UE.

The RRC release message may include a suspend configuration, which is used to indicate the UE to suspend the context of the UE.

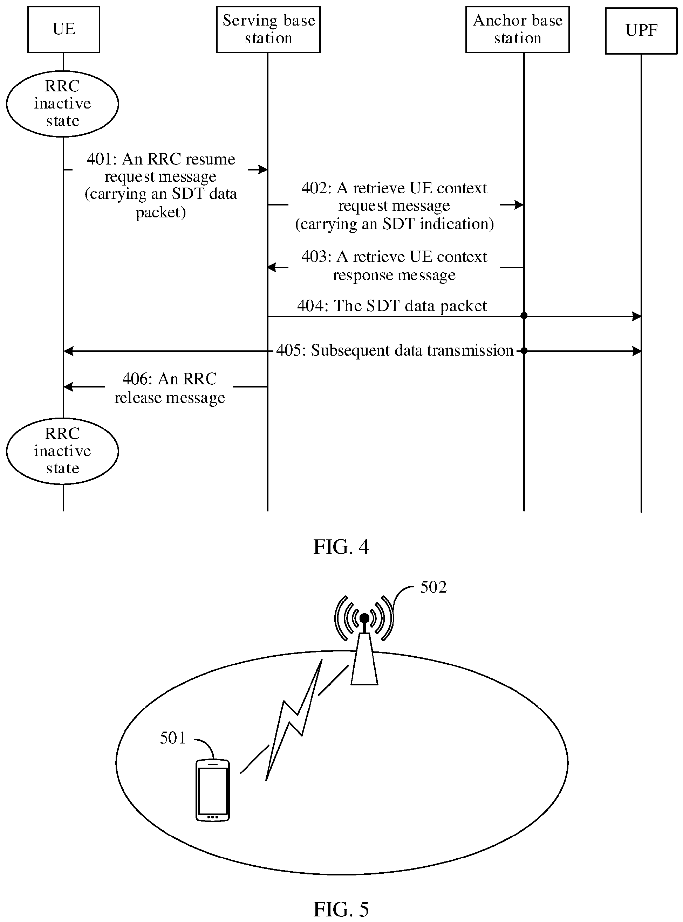

For another example, FIG. 4 is a flowchart of performing SDT in an anchor non-migration scenario. As shown in FIG. 4, the process may include the following steps:
Step 401: UE in an RRC inactive state carries an SDT data packet in an RRC resume request message sent to a serving base station, where the RRC resume request message that carries the SDT data packet may be used to request to perform SDT.
Step 402: If the serving base station of the UE is not an anchor base station of the UE, the serving base station sends a retrieve UE context request message, where the retrieve UE context request message may include an SDT indication, to the anchor base station to indicate the anchor base station to perform SDT.
Step 403: The anchor base station sends a retrieve UE context response message to the serving base station.
Step 404: The serving base station sends, to an UPF through the anchor base station, the SDT data packet carried in the RRC resume request message by the UE.
Step 405: The UE performs transmission of subsequent SDT data packets with the UPF through the serving base station and the anchor base station.
Step 406: After data transmission is complete, the serving base station sends an RRC release message to the UE.

The RRC release message may include a suspend configuration, which is used to indicate the UE to suspend a context of the UE.

However, in actual application, the serving base station or the anchor base station may fail to meet a requirement for performing SDT for some reasons. How to deal with this situation, there is no relevant solution at present.

An embodiment of this application provides a data transmission method, to provide a processing solution when a serving base station or an anchor base station does not meet a requirement of SDT.

This embodiment of this application may be applicable to, but not limited to, the following communication systems: A narrow band-internet of things (narrow band-internet of things, NB-IoT) system, a wireless local access network (wireless local access network, WLAN) system, a long term evolution (long term evolution, LTE) system, a 5G mobile communication system, or a communication system after the 5G, for example, a 6G system, a device to device (device to device, D2D) communication system, or an internet of vehicles.

The following uses FIG. 5 as an example to describe the communication system provided in this embodiment of this application. As shown in FIG. 5, the communication system may include a terminal device 501 and a serving access network device 502. The serving access network device 502 is an access network device that currently provides a service for the terminal device 501.

It should be noted that in this embodiment of this application, an access network device to which a cell in which the terminal device currently resides belongs or an access network device that currently provides a service for the terminal device may be referred to as a serving access network device (for example, the serving base station described above). An access network device to which a last cell in which the terminal device resides before entering an inactive state belongs or a last access network device that provides a service for the terminal device may be referred to as an anchor access network device (for example, the anchor base station described above). The serving access network device may be the same as the anchor access network device, or the serving access network device may be different from the anchor access network device.

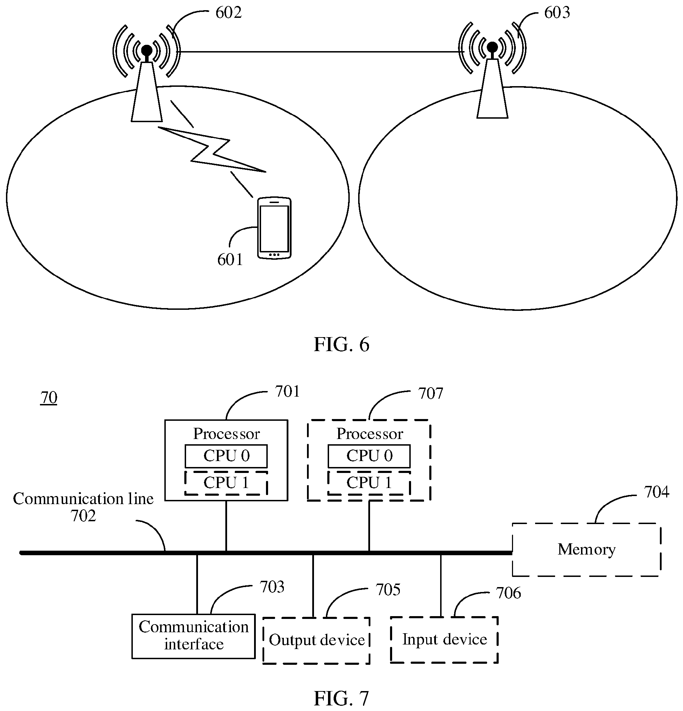

Optionally, as shown in FIG. 6, when the serving access network device is different from the anchor access network device, in addition to a terminal device 601 and a serving access network device 602, the communication system further includes an anchor access network device 603. The anchor access network device 603 is the last access network device that provides a service for the terminal device 601 before the terminal device 601 enters an inactive state, and the anchor access network device 603 is different from the serving access network device 602.

Optionally, a 5G communication system is used as an example. A schematic diagram of a possible network architecture that corresponds to the communication system shown in FIG. 5 or FIG. 6 and that is applicable to this embodiment of this application may be shown in FIG. 1. For example, the terminal device 601 may be the UE in FIG. 1, the serving access network device 602 or the anchor access network device 603 may be a device in the AN or RAN shown in FIG. 1.

A system architecture described in this embodiment of this application is intended to more clearly describe a technical solution in this embodiment of this application, but is not intended to limit the technical solution provided in this embodiment of this application. A person of ordinary skill in the art may know that as the network architecture evolves and a new service scenario emerges, the technical solution provided in this embodiment of this application is also applicable to a similar technical problem.

The access network device in this application may be an apparatus deployed in a radio access network to provide a wireless communication function for a terminal device. The access network device in this embodiment of this application may be a base station, so that the serving access network device 602 may be a serving base station and the anchor access network device 603 may be an anchor base station. The base station may include a plurality of forms, for example: a macro base station, a micro base station (also referred to as a small cell), a relay station, and an access point (access point). In systems using different radio access technologies, the access network device may have different names, for example: a base transceiver station (Base Transceiver Station, BTS) in a global system for mobile communication (global system for mobile communication, GSM) or a code division multiple access (code division multiple access, CDMA) network, an NB (NodeB) in wideband code division multiple access (wideband code division multiple access, WCDMA), an eNB or eNodeB (evolutional NodeB) in long term evolution (Long Term Evolution, LTE), or a base station in a 5G network or a future evolved public land mobile network (public land mobile network, PLMN). The access network device may alternatively be a broadband network gateway (broadband network gateway, BNG), an aggregation switch, or a non-3GPP access device. In addition, the access network device may alternatively be a radio controller in a cloud radio access network (cloud radio access network, CRAN), a transmission and reception point (transmission and reception point, TRP), a device including a TRP, or the like. This is not specifically limited in this embodiment of this application.

The terminal device in this embodiment of this application may be a device with a wireless transceiver function, and may be deployed on land, including indoor, outdoor, handheld, or vehicle-mounted, may be deployed on a water surface (for example, a ship), or may be deployed in the air (for example, an airplane, a balloon, or a satellite). The terminal device may be UE, an access terminal, a terminal unit, a subscriber unit (subscriber unit), a terminal station, a mobile station (Mobile Station, MS), a mobile console, a remote station, a remote terminal, a mobile device, a wireless communication device, a terminal agent, a terminal apparatus, or the like in the 5G network or a future evolved public land mobile network (public land mobile network, PLMN). The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or stationary.

Optionally, the terminal device, the serving access network device, and the anchor access network device in this embodiment of this application may use a component structure shown in FIG. 7 or include components shown in FIG. 7. FIG. 7 is a schematic diagram of a structure of a communication apparatus 70 according to an embodiment of this application. As shown in FIG. 7, the communication device 70 includes one or more processors 701, a communication line 702, and at least one communication interface (in FIG. 7, only a communication interface 703 and one processor 701 are included as an example for description), and optionally, may further include a memory 704.

The processor 701 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 702 may include a channel for communication between different components.

The communication interface 703 may be a transceiver module, configured to communicate with another device or a communication network, such as an Ethernet, a RAN, a wireless local area network (wireless local area networks, WLAN), or the like. For example, the transceiver module may be an apparatus such as a transceiver or a transceiver machine. Optionally, the communication interface 703 may alternatively be a transceiver circuit located in the processor 701 to implement signal input and signal output of the processor.

The memory 704 may be an apparatus having a storage function. For example, the memory may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory is not limited thereto. The memory may exist independently, and is connected to the processor through the communication line 702. The memory may alternatively be integrated with the processor.

The memory 704 is configured to store computer-executable instructions for performing the solutions of this application, and the processor 701 controls execution. The processor 701 is configured to execute the computer-executable instructions stored in the memory 704, to implement the data transmission method provided in embodiments of this application.

Alternatively, optionally, in this embodiment of this application, the processor 701 may perform processing related functions in a data transmission method provided in the following embodiment of this application, and the communication interface 703 is responsible for communication with another device or a communication network. This is not specifically limited in this embodiment of this application.

Optionally, the computer-executable instructions in this embodiment of this application may also be referred to as application code. This is not specifically limited in this embodiment of this application.

In specific implementation, in an embodiment, the processor 701 may include one or more CPUs, for example, CPU 0 and CPU 1 in FIG. 7.

In specific implementation, in an embodiment, the communication device 70 may include a plurality of processors, for example, the processor 701 and a processor 707 in FIG. 7. Each of the processors may be a single-core (single-core) processor, or may be a multi-core (multi-core) processor. The processor herein may include, but is not limited to, at least one of the following: a central processing unit (central processing unit, CPU), a microprocessor, a digital signal processor (DSP), a microcontroller unit (microcontroller unit, MCU), an artificial intelligence processor, or various computing devices running software. Each computing device may include one or more cores for executing software instructions to perform operations or processing.

In specific implementation, in an embodiment, the communication device 70 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, a projector (projector), or the like. The input device 706 communicates with the processor 701, and may receive an input from a user in a plurality of manners. For example, the input device 706 may be a mouse, a keyboard, a touchscreen device, or a sensor device.

The communication device 70 sometimes may also be referred to as a communication apparatus, and may be a general-purpose device or a dedicated device. For example, the communication device 70 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 7. A type of the communication device 70 is not limited in this embodiment of this application.

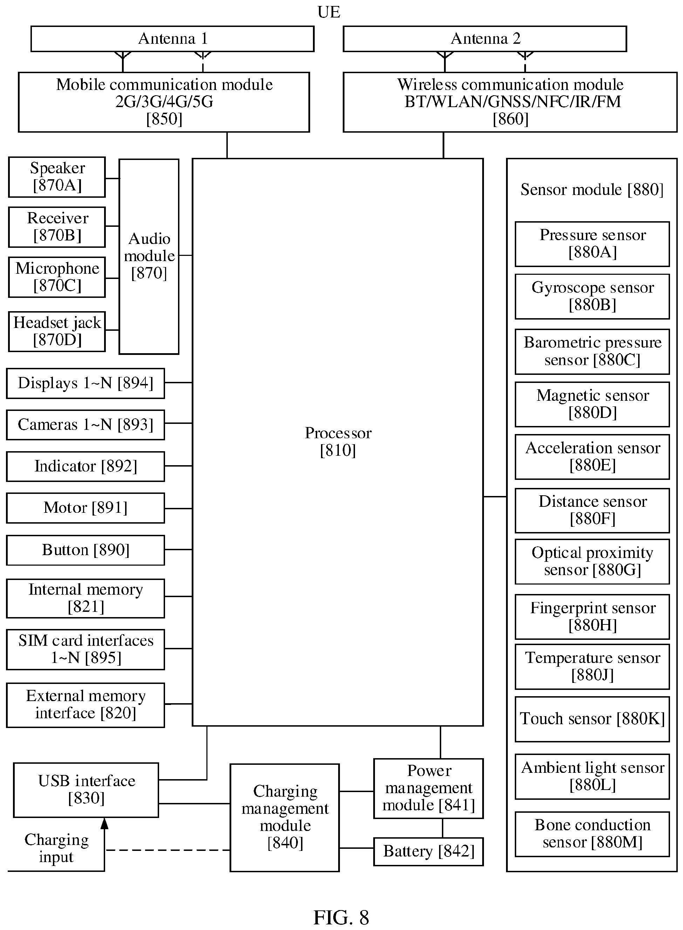

Optionally, FIG. 8 is a schematic diagram of a hardware structure of UE. As shown in FIG. 8, in some embodiments, a structure of the UE may be shown in FIG. 8, and the UE may include: a processor 810, an external memory interface 820, an internal memory 821, a universal serial bus (universal serial bus, USB) interface 830, a charging management module 840, a power management module 841, a battery 842, an antenna 1, an antenna 2, a mobile communication module 850, a wireless communication module 860, an audio module 870, a speaker 870A, a receiver 870B, a microphone 870C, a headset jack 870D, a sensor module 880, a button 890, a motor 891, an indicator 892, a camera 893, a display 894, a subscriber identity module (subscriber identification module, SIM) card interface 895, and the like. The sensor module 880 may include a pressure sensor 880A, a gyroscope sensor 880B, a barometric pressure sensor 880C, a magnetic sensor 880D, an acceleration sensor 880E, a distance sensor 880F, an optical proximity sensor 880G, a fingerprint sensor 880H, a temperature sensor 880J, a touch sensor 880K, an ambient light sensor 880L, a bone conduction sensor 880M, and the like.

It may be understood that the structure illustrated in this embodiment does not constitute a specific limitation on the UE. In some other embodiments, the UE may include more or fewer components than those shown in the figure, some components may be combined, some components may be split, or components are arranged in different manners. The components shown in the figure may be implemented by using hardware, software, or a combination of software and hardware.

The processor 810 may include one or more processing units. For example, the processor 810 may include an application processor (application processor, AP), a Modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The charging management module 840 is configured to receive a charging input from a charger. The charger may be a wireless charger or a wired charger.

The power management module 841 is configured to connect to the battery 842, the charging management module 840, and the processor 810. The power management module 841 receives an input of the battery 842 and/or the charging management module 840, to supply power to the processor 810, the internal memory 821, a display 894, the camera 893, the wireless communication module 860, and the like.

A wireless communication function of the UE may be implemented through the antenna 1, the antenna 2, the mobile communication module 850, the wireless communication module 860, the modem, the baseband processor, and the like.

The antenna 1 and the antenna 2 are configured to transmit and receive electromagnetic wave signals. Each antenna in the UE may be configured to cover one or more communication frequency bands. Different antennas may be multiplexed to increase antenna utilization.

The mobile communication module 850 may provide a solution to wireless communication, for example, 2G/3G/4G/5G, applied to the UE.

The wireless communication module 860 may provide a wireless communication solution that is applied to the UE and that includes wireless local area networks (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 860 may be one or more components integrating at least one communication processing module. The wireless communication module 860 receives an electromagnetic wave through the antenna 2, performs frequency modulation and filtering processing on an electromagnetic wave signal, and sends a processed signal to the processor 810. The wireless communication module 860 may further receive a to-be-sent signal from the processor 810, perform frequency modulation and amplification on the signal, and convert the signal into an electromagnetic wave for radiation through the antenna 2.

In this embodiment of this application, the wireless communication module 860 may be configured for the UE to send an RRC connection resume request to a network node and receive a response message from the network node.

The UE implements a display function through the GPU, the display 894, the application processor, and the like. The GPU is a microprocessor for image processing and is connected to the display 894 and the application processor.

The display 894 is configured to display an image, a video, or the like. A series of graphical user interfaces (graphical user interface, GUI) may be displayed on the display 894 of the UE.

The UE may implement a photographing function through the ISP, the camera 893, the video codec, the GPU, the display 894, the application processor, and the like.

The camera 893 is configured to capture a still image or a video.

The external memory interface 820 may be configured to connect to an external storage card, for example, a Micro SD card, to extend a storage capability of the UE.

The internal memory 821 may be configured to store computer-executable program code. The executable program code includes instructions. The processor 810 runs the instructions stored in the internal memory 821, to perform various function applications and data processing of the UE.

The UE can implement an audio function by using the audio module 870, the speaker 870A, the receiver 870B, the microphone 870C, the headset jack 870D, the application processor, and the like. The audio function includes, for example, music playing and sound recording. The UE may further include the pressure sensor 880A, the barometric pressure sensor 880C, the gyroscope sensor 880B, the magnetic sensor 880D, the acceleration sensor 880E, the distance sensor 880F, the optical proximity sensor 880G, the ambient light sensor 880L, the fingerprint sensor 880H, the temperature sensor 880J, the touch sensor 880K, the bone conduction sensor 880M, the button 890, the motor 891, the indicator 892, and the like.

The SIM card interface 895 is configured to connect a SIM card. The SIM card may be inserted into the SIM card interface 895 or removed from the SIM card interface 895, to implement contact with or separation from the UE. The UE may support one or N SIM card interfaces, where N is a positive integer greater than 1. The SIM card interface 895 can support a Nano SIM card, a Micro SIM card, a SIM card, and the like. A plurality of cards can be simultaneously inserted into a same SIM card interface 895. The SIM card interface 895 may further be compatible with an external memory card. The UE interacts with a network through the SIM card, to implement functions such as a call and data communication.

In addition, an operating system, for example, a Harmony operating system, an iOS operating system, an Android operating system, or a Windows operating system, runs on the foregoing components. An application can be installed and run on the operating system. In some other embodiments, there may be a plurality of operating systems running in the UE.

It should be understood that the hardware modules included in the UE shown in FIG. 8 are only examples for description, and do not constitute a limitation on a specific structure of the UE. In fact, the UE provided in this embodiment of this application may further include other hardware modules having an interaction relationship with the hardware modules shown in the figure. This is not specifically limited herein. For example, the UE may further include a flash light and a micro projection apparatus. For another example, if the UE is a PC, the UE may further include components such as a keyboard and a mouse.

The following describes the data transmission method provided in embodiments of this application with reference to FIG. 1 to FIG. 8. An apparatus in the following embodiments may have the components shown in FIG. 8. The actions, terms, and the like in embodiments of this application may be mutually referenced, and are not limited. In the embodiments of this application, a name of a message or a parameter name in the message exchanged between devices is merely an example. In specific implementation, another name may also be used, which is not limited.

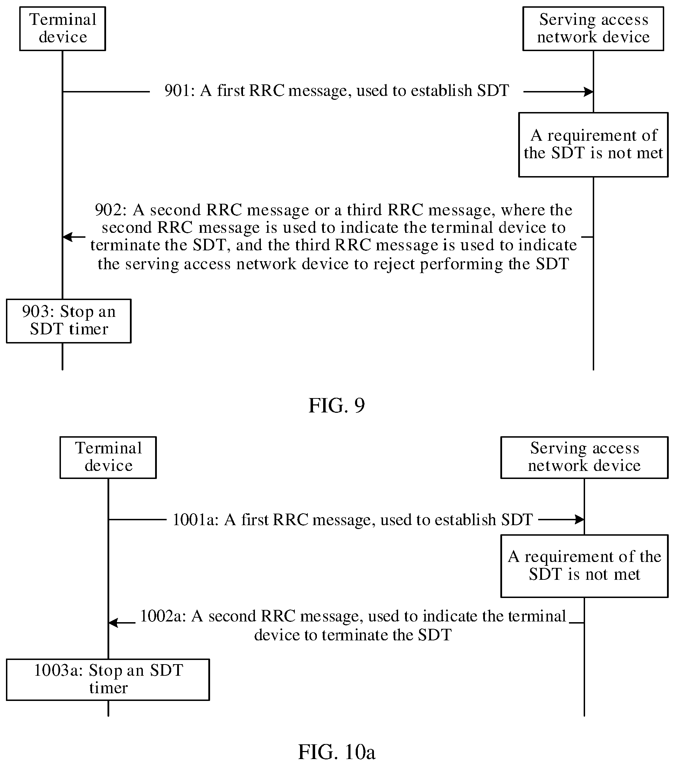

FIG. 9 is a flowchart of a data transmission method according to an embodiment of this application. As shown in FIG. 9, the data transmission method may include the following steps.

Step 901: A terminal device sends a first RRC message to a serving access network device. Accordingly, the serving access network device receives the first RRC message from the terminal device. The first RRC message is used to establish SDT.

Optionally, the first RRC message may be an RRC resume request message. It should be understood that the first RRC message is implemented by using the RRC resume request message, and may be compatible with an existing communication system, thereby improving compatibility and availability of the data transmission method in this application.

Optionally, the first RRC message may include a first SDT data packet, where the first SDT data packet is a data packet that needs to be sent through the SDT.

Optionally, the first SDT data packet carried in the first RRC message may be used to enable the serving access network device to identify that the first RRC message is used to establish the SDT. This manner may be understood as an implicit indication.

Optionally, the first RRC message may include indication information or identification information, to explicitly indicate the serving access network device to establish the SDT by using the indication information or identification information. This implementation may be understood as an explicit indication.

It should be noted that in this embodiment of this application, the terminal device is in an RRC inactive state when sending the first RRC message.

Step 902: If the serving access network device does not meet a requirement of the SDT, the serving access network device sends a second RRC message or a third RRC message to the terminal device. Accordingly, the terminal device receives the second RRC message or the third RRC message from the serving access network device. The second RRC message is used to indicate the terminal device to terminate the SDT, and the third RRC message is used to indicate the serving access network device to reject performing the SDT.

Optionally, when the serving access network device does not meet the requirement of the SDT, it may mean that the serving access network device does not meet the requirement of the SDT when the first RRC message is received. Alternatively, it may also mean that the serving access network device does not meet the requirement of the SDT in a process of performing the SDT.

It should be understood that if the serving access network device does not meet the requirement of the SDT when the first RRC message is received, it indicates that the serving access network device has not started to perform the SDT. If the serving access network device does not meet the requirement of the SDT in the process of performing the SDT, it indicates that the serving access network device successfully establishes the SDT after the first RRC message is received, and the SDT process may be triggered by the first RRC message.

Optionally, that the serving access network does not meet the requirement of the SDT when the first RRC message is received may mean that the serving access network device does not support the SDT, congestion occurs on the serving access network device, or load of the serving access network device is greater than a threshold. That the serving access network does not meet the requirement of the SDT in the process of performing the SDT may mean that congestion occurs on the serving access network device or the load of the serving access network device is greater than the threshold. That the load of the serving access network is greater than the threshold may mean that excessive load is caused by the congestion occurring on the serving access network. Alternatively, the serving access network device needs to redirect the terminal to a different frequency layer based on a load balancing requirement for a network.

Step 903: The terminal device stops an SDT timer when the terminal device receives the second RRC message or the third RRC message from the serving access network device. The second RRC message is used to indicate the terminal device to terminate the SDT, and the third RRC message is used to indicate the serving access network device to reject performing the SDT.

Optionally, the terminal device may start the SDT timer when sending the first RRC message. Therefore, when the SDT terminates or fails, the SDT timer may be stopped.

In this embodiment of this application, when the serving access network device does not meet the requirement of the SDT, the serving access network device may send the second RRC message to indicate the terminal device to terminate the SDT or send the third RRC message to indicate the serving access network device to reject performing the SDT, which may enable the terminal device to stop the SDT timer in time (which means that the SDT is terminated), avoiding a long data transmission delay caused by the terminal device continuing to wait in a current cell.

Additionally, a reason why the serving access network device does not meet the requirement of the SDT may include that the load is greater than the threshold. When the load is greater than the threshold, the SDT is terminated or rejected, so that the SDT can be prevented from increasing the burden on the serving access network device, and load balancing can be implemented.

Optionally, the serving access network device and an anchor access network device in the embodiment shown in FIG. 9 may have the following two relationships: the two are a same access network device, or the two are different access network devices. Specific implementations of the embodiment shown in FIG. 9 under these two relationships are described below, respectively.

FIG. 10a illustrates a specific implementation of the embodiment shown in FIG. 9 when the serving access network device and the anchor access network device are a same access network device and the serving access network device does not meet the requirement of the SDT when receiving the first RRC message. As shown in FIG. 10a, the method may include the following steps:
Step 1001a: A terminal device sends a first RRC message to a serving access network device (which is also an anchor access network device). Accordingly, the serving access network device receives the first RRC message from the terminal device. The first RRC message is used to establish SDT.

For step 1001a, refer to the description in step 901. Details are not described herein again]

Step 1002a: If the serving access network device does not meet a requirement of the SDT, the serving access network device sends a second RRC message to the terminal device. Accordingly, the terminal device receives the second RRC message from the serving access network device. The second RRC message is used to indicate the terminal device to terminate the SDT.

For the description of the access network device that does not meet the requirement of the SDT, refer to the description in step 902. Details are not described herein again.

When the serving access network device and the anchor access network device are the same access network device, the second RRC message is generated by the serving access network device.

Optionally, the second RRC message may be implemented by an RRC release message.

Optionally, the second RRC message may include a suspend configuration to indicate the terminal device to suspend a context of the terminal device. The method facilitates the terminal device to subsequently continue to use the context to re-initiate a communication connection.

Optionally, the second RRC message may include a wait time (wait time), and the wait time may be used to indicate duration that the terminal device waits before initiating a next communication connection. It should be noted that this embodiment of this application does not limit the next communication connection initiated by the terminal device, and the communication connection may mean that the terminal device sends signaling to the access network device, to establish a connection between the terminal device and the access network device, so that the terminal device can communicate with the access network device. For example, the communication connection may be an RRC connection, an SDT connection, or the like.

It should be understood that if the terminal device immediately initiates a communication connection (for example, re-triggers SDT) again after receiving the second RRC message, it is still possible that a current serving access network device is selected by the terminal device. However, the current serving access network device does not meet the requirement of the SDT, and the communication connection initiated by the terminal device is terminated again, resulting in a waste of signaling resources. When the second RRC message includes the wait time, the terminal device may initiate a communication connection after the wait time, and within the wait time of the terminal device, if a capability of the serving access network device is restored enough to perform SDT, SDT re-triggered by the terminal device will succeed subsequently even if the terminal device selects the current serving access network device. For example, in an example in which congestion occurs on the serving access network device, after the terminal device waits for a period of time, if the serving access network device is not congested, the terminal device subsequently triggers SDT again and the SDT will succeed.

In a possible implementation, a format of the wait time in the second RRC message may be as follows:

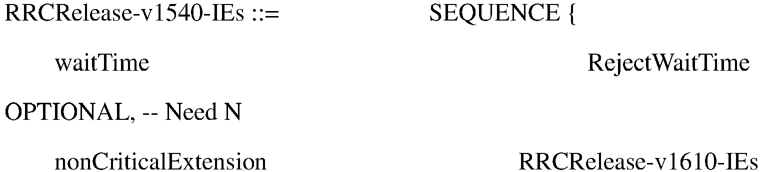

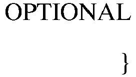

Optionally, the second RRC message may include a first redirection parameter or a first cell reselection priority parameter, the first redirection parameter is used for redirection, and the first cell reselection priority parameter is used for cell reselection. The second RRC message carries the first redirection parameter or the first cell reselection priority parameter, so that the terminal device performs redirection or cell reselection based on the first redirection parameter or the first cell reselection priority parameter, to improve a success rate of re-triggering SDT by the terminal device.

In a possible implementation, the first redirection parameter may be a carrier redirection parameter. The first redirection parameter may include at least one of the following: a redirection frequency (frequency) layer, a priority, a redirection radio access technology (radio access technology, RAT) type (for example, LTE), a redirection core network type (for example, an evolved packet core network (evolved packet core network, EPC), a 5G core (five generation core)), and redirection frequency information (for example, subcarrier spacing, an absolute radio frequency channel number (absolute radio frequency channel number, ARFCN), and a synchronization signal block measurement timing configuration (synchronization signal block measurement timing configuration, SSB-MTC)).

In a possible implementation, a format of the first redirection parameter in the second RRC message may be as follows:

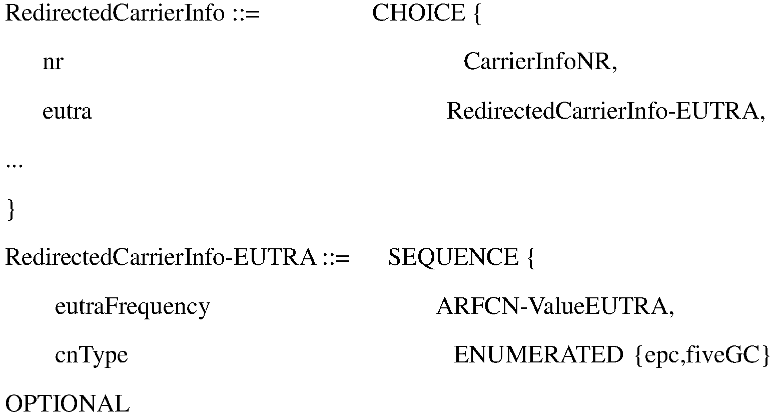

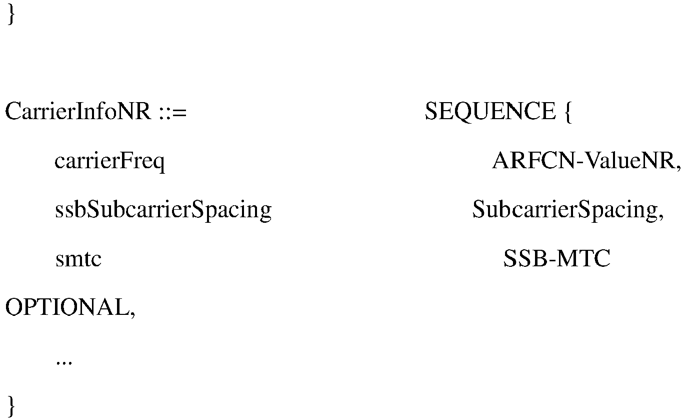

The first cell reselection priority parameter may be a parameter of a peripheral cell (which may also be referred to as a neighboring cell) of a current access cell. The first cell reselection priority parameter may include at least one of the following: a frequency priority list (for example, an NR frequency priority or an LTE frequency priority) and a cell selection priority list (for example, a cell frequency priority or a cell absolute priority).

In a possible implementation, a format of the first cell reselection priority parameter in the second RRC message may be as follows:

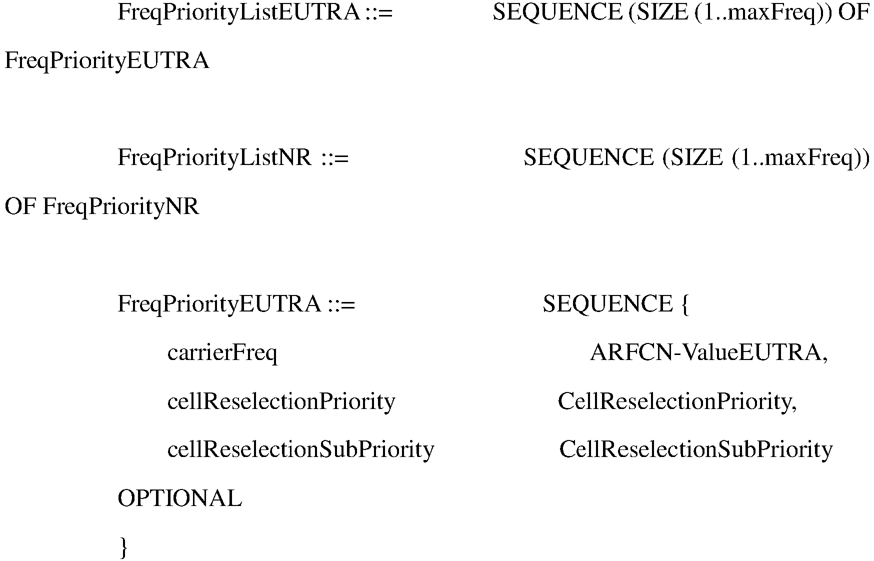

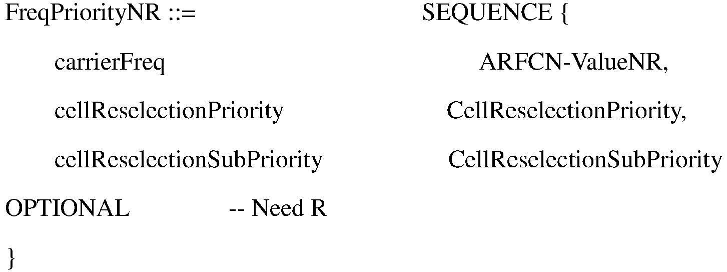

Step 1003a: The terminal device stops an SDT timer.

Optionally, the terminal device may start the SDT timer when sending the first RRC message. Because the second RRC message is used to indicate the terminal device to terminate the SDT, the terminal device may stop the SDT timer after receiving the second RRC message.

Optionally, the terminal device may further notify an upper layer of an SDT termination. The upper layer is an upper layer in a protocol layer of the terminal device. For example, the upper layer may be a non-access stratum (non-access stratum, NAS).

Optionally, the second RRC message may include a suspend configuration, and the terminal device may suspend the context of the terminal device. That the context of the terminal device is suspended means that the terminal device continues to remain in an RRC inactive state. In this case, the terminal device may restart an RNA timer, or continue running the RNA timer in a paused state. RNA means a radio access network (radio access network, RAN) home location-based notification area (RAN-based notification area), and the RNA timer is used to indicate that the terminal device is in the RRC inactive state. Based on this solution, subsequently, the terminal device in the inactive state may send the first RRC message to the access network device again, to re-request to perform SDT.

Optionally, the terminal device may stop or pause the RNA timer when sending the first RRC message.

It should be noted that restarting the RNA timer and continuing to run the RNA timer are two different implementations provided in this application.

Optionally, if the second RRC message is an RRC release message, and the second RRC message carries no suspend configuration, after receiving the second RRC message, the terminal device may release the context of the terminal device, and switch from the RRC inactive state to an RRC idle state. It should be noted that after entering the RRC idle state, if a next communication connection needs to be initiated subsequently, the terminal device needs to switch to an RRC connected state before initiating the communication connection.

Optionally, if the second RRC message includes a wait time, the terminal device may initiate the next communication connection after the wait time that starts at a specific moment. For example, the moment may be a moment at which the second RRC message is received by the terminal device.

Optionally, if the second RRC message includes the first redirection parameter or the first cell reselection priority parameter, when initiating the next communication connection, the terminal device may perform redirection based on the first redirection parameter, or perform cell reselection based on the first cell reselection priority parameter. Then, the terminal device may initiate the next communication connection in a serving cell after the redirection or in a serving cell after the cell reselection.

It should be noted that this embodiment of this application does not limit the next communication connection initiated by the terminal device, and the communication connection may mean that the terminal device sends signaling to the access network device, to establish a connection between the terminal device and the access network device, so that the terminal device can communicate with the access network device. For example, the communication connection may be an RRC connection, an SDT connection, or the like.

Optionally, when the second RRC message includes the wait time, if an unsent SDT data packet exists in a buffer (buffer) of the terminal device, the terminal device may ignore the wait time, and immediately re-trigger SDT.

In another possible implementation, when the second RRC message includes the wait time and the first redirection parameter, if an unsent SDT data packet exists in the buffer (buffer) of the terminal device, the terminal device may ignore the wait time, perform redirection based on the first redirection parameter, and trigger SDT in a first cell, to send the unsent SDT data packet in the buffer, where the first cell is a serving cell after the terminal device performs the redirection.

In a possible implementation, when the second RRC message includes the wait time and the first cell reselection priority parameter, if an unsent SDT data packet exists in the buffer (buffer) of the terminal device, the terminal device may ignore the wait time, perform cell reselection based on the first cell reselection priority parameter, and trigger SDT in a second cell, to send the unsent SDT data packet in the buffer, where the second cell is a serving cell after the cell reselection is performed.

Optionally, because the serving access network device is the anchor access network device, if the first RRC message includes a first SDT data packet, the serving access network device may further send the first SDT data packet to a user plane network element (such as a UPF). Therefore, the first SDT data packet carried in the first RRC message may not be discarded, thereby improving signaling utilization efficiency.

It can be learned from the data transmission method shown in FIG. 10a that, in this embodiment of this application, when the serving access network device does not meet the requirement of the SDT, the serving access network device may send the second RRC message to terminate the SDT, so that a terminal can be prevented from continuing to wait in a current cell. The method improves data transmission efficiency of the terminal device. In addition, the second RRC message may include a wait time, a redirection parameter, a cell reselection parameter, or the like, so that the terminal device can perform redirection or cell reselection according to an indication of the access network device. In this method, SDT can be prevented from increasing the burden on the serving access network device, and load balancing can be implemented.

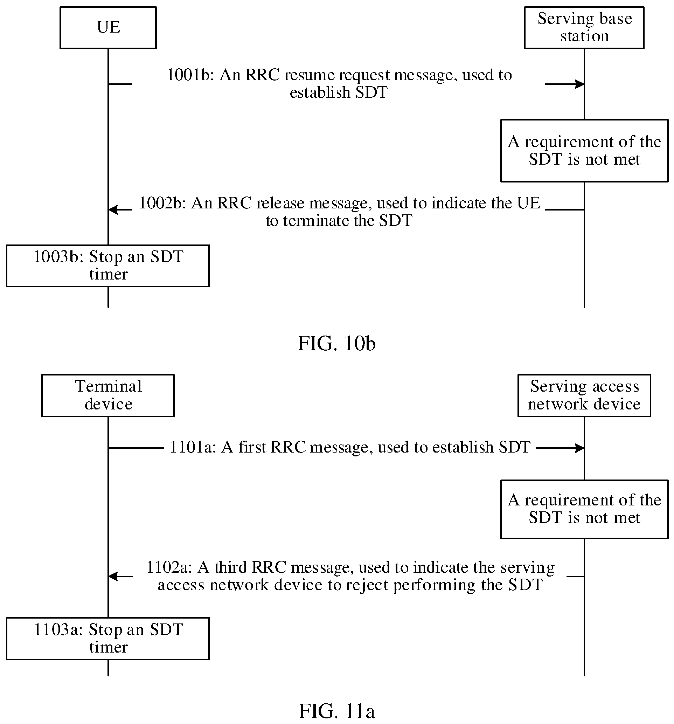

That the terminal device is UE, the access network device is a base station, the first RRC message is an RRC resume request message, and the second RRC message is an RRC release message is used as an example to describe again the procedure of the data transmission method shown in FIG. 10a. As shown in FIG. 10b, the data transmission method may include the following steps:

Step 1001b: The UE sends the RRC resume request message to a serving base station. The RRC resume request message is used to request to perform SDT.

Step 1002b: If the serving base station does not meet a requirement of the SDT, the serving base station sends the RRC release message to the UE. The RRC release message is used to indicate the UE to terminate the SDT.

Step 1003b: The UE stops an SDT timer.

FIG. 11a illustrates a specific implementation of the embodiment shown in FIG. 9 when the serving access network device and the anchor access network device are a same access network device and the serving access network device does not meet the requirement of the SDT when receiving the first RRC message. As shown in FIG. 11a, the method may include the following steps.

Step 1101a: A terminal device sends a first RRC message to a serving access network device (which is also an anchor access network device), where the first RRC message is used to establish SDT.

For step 1101a, refer to the description in step 901. Details are not described herein again.

Step 1102a: If the serving access network device does not meet a requirement of the SDT, the serving access network device sends a third RRC message to the terminal device. Accordingly, the terminal device receives the third RRC message from the serving access network device. The third RRC message is used to indicate the serving access network device to reject performing the SDT.

For the description of the access network device that does not meet the requirement of the SDT, refer to the description in step 902. Details are not described herein again.

When the serving access network device and the anchor access network device are the same access network device, the third RRC message is generated by the serving access network device.

Optionally, the third RRC message may be implemented by an RRC reject message.

Optionally, the third RRC message may include a wait time, and the wait time may be used to indicate duration that the terminal device waits before initiating a next communication connection.

In a possible implementation, a message format of the third RRC message may be as follows:

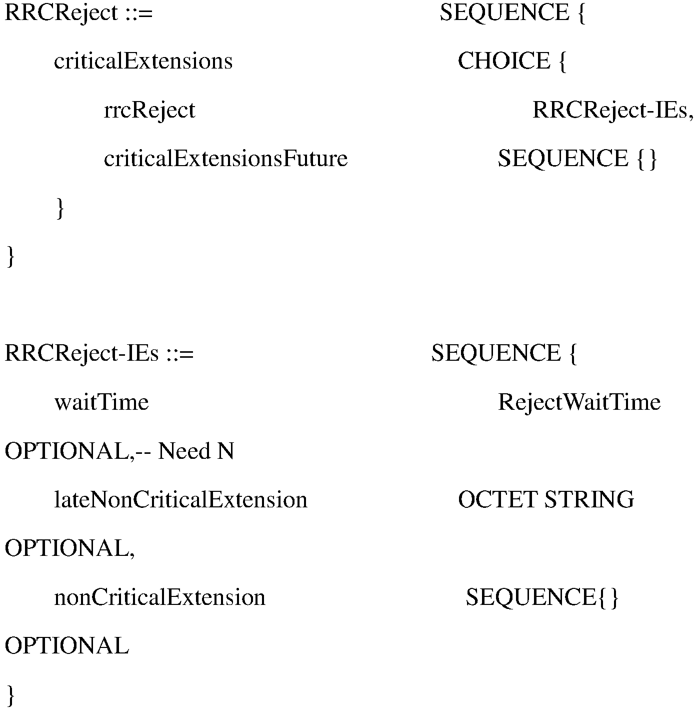

Step 1103a: The terminal device stops an SDT timer.

Optionally, the terminal device may start the SDT timer when sending the first RRC message. Because the third RRC message is used to indicate the serving access network device to reject performing the SDT, it means that the SDT fails. Therefore, after receiving the second RRC message, the terminal device may stop the SDT timer.

Optionally, the terminal device may notify an upper layer of an SDT failure, and may restart or continue to run an RNA timer in a paused state.

Optionally, the terminal device may stop or pause the RNA timer when sending the first RRC message.

It should be noted that restarting the RNA timer and continuing to run the RNA timer are two different implementations provided in this application.

It should be noted that after receiving the third RRC message, the terminal device may learn that the SDT is rejected. In this case, the terminal device will subsequently send the first RRC message again, and continue to request to establish SDT. In this scenario, the terminal device needs to keep an RRC inactive state, to send the first RRC message again. Therefore, after receiving the third RRC message, the terminal device may restart or continue to run the RNA timer in the paused state.

Optionally, if the third RRC message includes the wait time, the terminal device waits for the wait time in the third RRC message before initiating the next communication connection.

Optionally, because the serving access network device is the anchor access network device, if the first RRC message includes a first SDT data packet, the serving access network device may further send the first SDT data packet to a user plane network element (such as a UPF). Therefore, the first SDT data packet carried in the first RRC message may not be discarded, thereby improving signaling utilization efficiency.

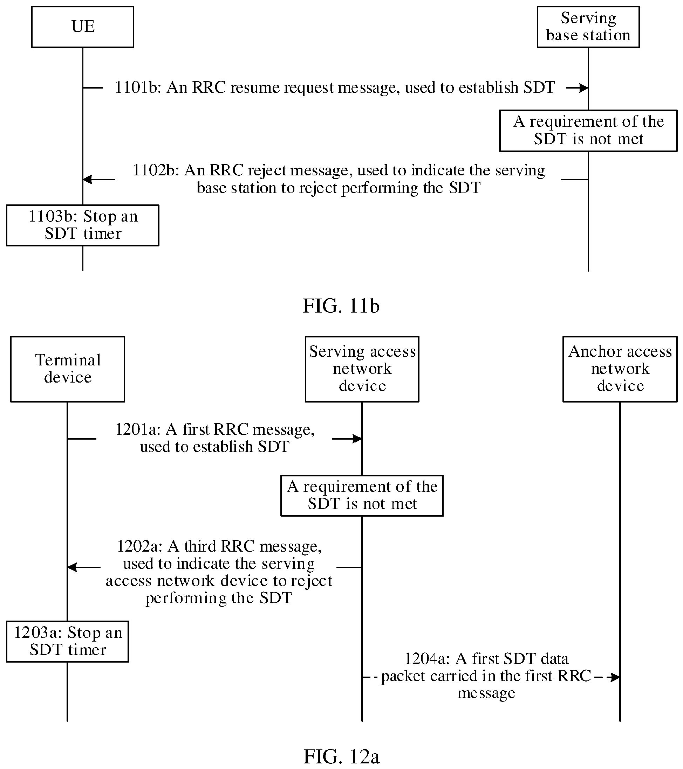

That the terminal device is UE, the access network device is a base station, the first RRC message is an RRC resume request message, and the third RRC message is an RRC reject message is used as an example to describe again the procedure of the data transmission method shown in FIG. 11a. As shown in FIG. 11b, the data transmission method may include the following steps:
Step 1101b: The UE sends the RRC resume request message to a serving base station. The RRC resume request message is used to request to perform SDT.
Step 1102b: If the serving base station does not meet a requirement of the SDT, the serving base station sends the RRC reject message to the UE. The RRC reject message is used to indicate the serving base station to reject performing the SDT.
Step 1103b: The UE stops an SDT timer.

FIG. 12a illustrates a specific implementation of the embodiment shown in FIG. 9 when the serving access network device is different from the anchor access network device and the serving access network device does not meet the requirement of the SDT when receiving the first RRC message. As shown in FIG. 12a, the method may include the following steps.

Step 1201a: A terminal device sends a first RRC message to a serving access network device. Accordingly, the serving access network device receives the first RRC message from the terminal device. The first RRC message is used to establish SDT.

Step 1202a: If the serving access network device does not meet a requirement of the SDT, the serving access network device sends a third RRC message to the terminal device. Accordingly, the terminal device receives the third RRC message from the serving access network device. The third RRC message is used to indicate the serving access network device to reject performing the SDT.

Step 1203a: The terminal device stops an SDT timer.

It should be noted that for steps 1201a to 1203a, refer to related descriptions in steps 1101a to 1103a. Details are not described herein again.

Optionally, if the first RRC message includes a first SDT data packet, the method may further include: Step 1204a: The serving access network device sends the first SDT data packet to an anchor access network device. Further, after receiving the first SDT data packet, the anchor access network device may forward the first SDT data packet to a user plane network element (not shown in FIG. 12a). Based on this, the first SDT data packet carried in the first RRC message may not be discarded, thereby improving signaling utilization efficiency. It should be noted that a performing sequence of step 1204a is not limited in this application, for example, step 1204a may alternatively be performed before step 1202a or 1203a.

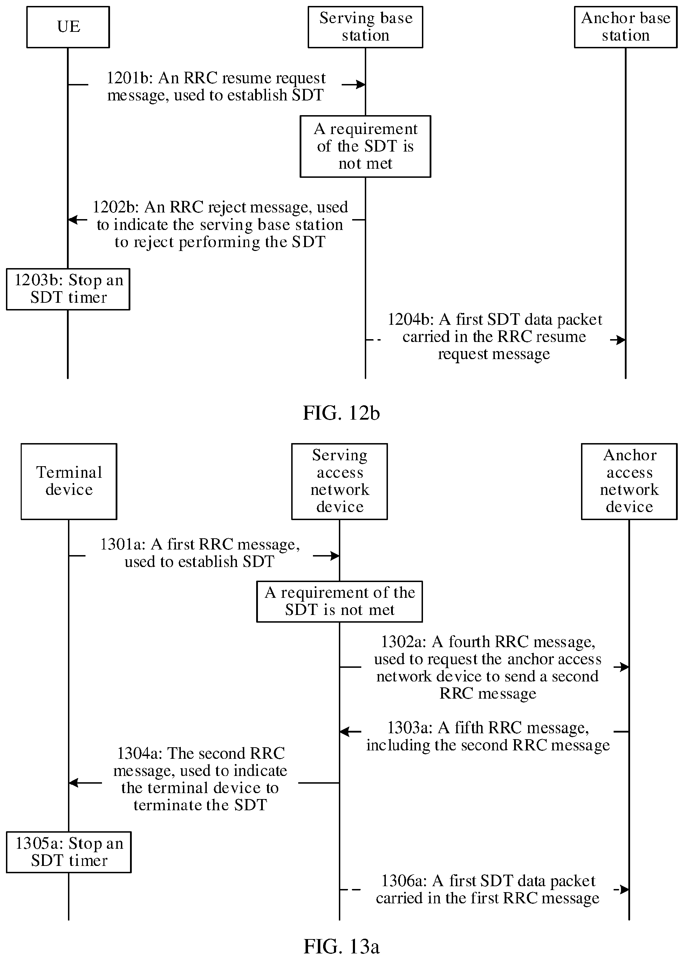

That the terminal device is UE, the access network device is a base station, the first RRC message is an RRC resume request message, and the third RRC message is an RRC reject message is used as an example to describe again the procedure of the data transmission method shown in FIG. 12a. As shown in FIG. 12b, the data transmission method may include the following steps:
Step 1201b: The UE sends the RRC resume request message to a serving base station. The RRC resume request message is used to request to perform SDT.
Step 1202b: If the serving base station does not meet a requirement of the SDT, the serving base station sends the RRC reject message to the UE. The RRC reject message is used to indicate the serving base station to reject performing the SDT.
Step 1203b: The UE stops an SDT timer.
Step 1204b: The serving base station sends a first SDT data packet carried in the RRC resume request message to an anchor base station.

FIG. 13a illustrates a specific implementation of the embodiment shown in FIG. 9 when the serving access network device is different from the anchor access network device and the serving access network device does not meet the requirement of the SDT when receiving the first RRC message. As shown in FIG. 13a, the method may include the following steps.

Step 1301 a: A terminal device sends a first RRC message to a serving access network device. Accordingly, an anchor access network device receives the first RRC message from the serving access network device. The first RRC message is used to establish SDT.

It should be noted that for step 1301a, refer to the related description in step 901. Details are not described herein again.

Step 1302a: If the serving access network does not meet a requirement of the SDT, the serving access network device sends a fourth RRC message to the anchor access network device. Accordingly, the anchor access network device receives the fourth RRC message from the serving access network device. The fourth RRC message is used to request the anchor access network device to send a second RRC message.

Optionally, that the fourth RRC message requests the anchor access network device to send the second RRC message may be implemented by using a request indication, a redirection indication, or a cell reselection indication. That is, the fourth RRC message may include any one of the request indication, the redirection indication, or the cell reselection indication, where the request indication may be used to request the anchor access network device to send the second RRC message, the redirection indication may be used to indicate the serving access network device to recommend the terminal device to perform redirection, and the cell reselection indication may be used to indicate the serving access network device to recommend the terminal device to perform cell reselection. The fourth RRC message may be understood as an explicit request when the request indication is included, and the fourth RRC message may be understood as an implicit request when the redirection indication or the cell reselection indication is included.

Optionally, the fourth RRC message may be a retrieve UE context request message. That the fourth RRC message is the retrieve UE context request message is equivalent to that the fourth RRC message multiplexes an existing signaling message. In this case, the fourth RRC message needs to include additional indication information, so that the anchor access network device distinguishes between the fourth RRC message and the existing signaling message.

For example, the additional indication information may be a transmission indication, and the transmission indication is used to indicate the terminal device to request to perform SDT. In a possible implementation, the transmission indication may be an SDT indication (SDT indictor).

Optionally, the fourth RRC message may include a second redirection parameter, and the second redirection parameter may be used to assist the anchor access network device in determining a first redirection parameter. Alternatively, the fourth RRC message may include a second cell reselection priority parameter, and the second cell reselection priority parameter may be used to assist the anchor access network device in determining a first cell reselection priority parameter.

Optionally, the second redirection parameter sent by the serving access network device may be understood as a recommendation provided by the serving access network device for the anchor access network device, so that the anchor access network device determines the first redirection parameter. For the second cell reselection priority parameter, refer to the description of the second redirection parameter. Details are not described again.

Optionally, the fourth RRC message may include a wait time indication and/or a first cause value, where the wait time indication is used to indicate the anchor access network device to send a wait time, and the first cause value indicates a reason why the serving access network device requests the anchor access network device to send the second RRC message.

For example, if the serving access network device does not meet the requirement of the SDT due to network congestion, the first cause value may be the network congestion.

Optionally, if the first RRC message includes a first SDT data packet, the serving access network device may add the first SDT data packet to the fourth RRC message and send the fourth RRC message to the anchor access network device, that is, the fourth RRC message includes the first SDT data packet.

Step 1303a: The anchor access network device sends a fifth RRC message to the serving access network device. Accordingly, the serving access network device receives the fifth RRC message from the anchor access network device.

The fifth RRC message is a response message of the fourth RRC message, the fifth RRC message includes the second RRC message, and the second RRC message is used to indicate the terminal device to terminate the SDT. For content of the second RRC message, refer to the related description of the second RRC message in step 1002a. Details are not described herein again.

Optionally, the fourth RRC message is a retrieve UE context request message. Correspondingly, the fifth RRC message may be a retrieve UE context response message.

Optionally, the second RRC message may be encapsulated in the fifth RRC message in a form of an RRC container (RRC container).

Optionally, the fifth RRC message sent by the anchor access network device may be determined based on the fourth RRC message.

Optionally, if the fourth RRC message includes any one of the request indication, the redirection indication, or the cell reselection indication, the anchor access network device may determine, according to the request indication, the redirection indication, or the cell reselection indication, that the fifth RRC message includes the second RRC message. After receiving the redirection indication or the cell reselection indication, the anchor access network device may learn that the serving access network device recommends the terminal device to perform redirection or cell reselection, and an implied intention of the serving access network device is that the serving access network device wishes to terminate the SDT, so that it can be determined that the fifth RRC message includes the second RRC message used to indicate the terminal device to terminate the SDT.

Optionally, if the fourth RRC message includes the second redirection parameter, the anchor access network device may determine the first redirection parameter according to the second redirection parameter. If the fourth RRC message includes the second cell reselection priority parameter, the anchor access network device may determine the first cell reselection priority parameter according to the second cell reselection priority parameter.

Optionally, if the fourth RRC message includes the wait time indication, the anchor access network device may determine the wait time according to the wait time indication.

Step 1304a: The serving access network device sends the second RRC message to the terminal device. Accordingly, the terminal device receives the second RRC message from the serving access network device. The second RRC message is used to indicate the terminal device to terminate the SDT.

It should be understood that after receiving the fifth RRC message, the serving access network device may forward the second RRC message in the fifth RRC message to the terminal device.

Step 1305a: The terminal device stops an SDT timer.

It should be noted that for step 1305a, refer to the related description in step 1003a. Details are not described herein again.

Optionally, if the first RRC message includes the first SDT data packet, the method may further include: Step 1306a: The serving access network device sends the first SDT data packet to the anchor access network device. For step 1306a, refer to the description in step 1204a. Details are not described herein again. It should be noted that step 1306a is performed after step 1303a, and a performing sequence of step 1306a with step 1304a and step 1305a is not limited.

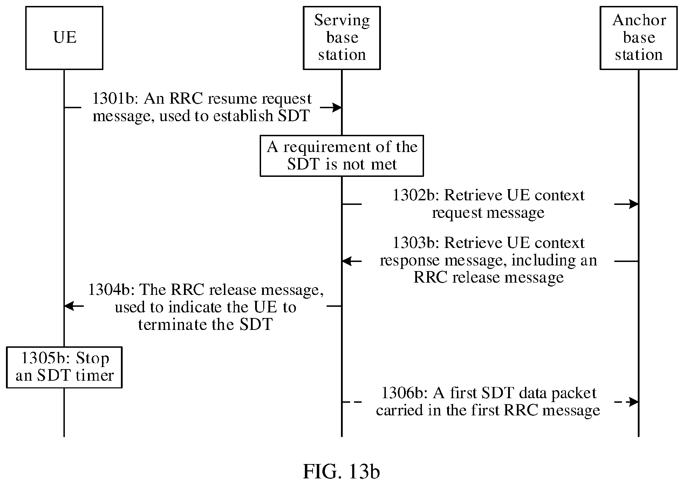

That the terminal device is UE, the access network device is a base station, the first RRC message is an RRC resume request message, the second RRC message is an RRC release message, the fourth RRC message is a retrieve UE context request message, and the fifth RRC message is a retrieve UE context response message is used as an example to describe again the procedure of the data transmission method shown in FIG. 13a. As shown in FIG. 13b, the data transmission method may include the following steps:

Step 1301b: The UE sends the RRC resume request message to a serving base station. The RRC resume request message is used to request to perform SDT.

Step 1302b: If the serving base station does not meet a requirement of the SDT, the serving base station sends the retrieve UE context request message to an anchor base station.

Step 1303b: The anchor base station sends a retrieve UE context response message to the serving base station. The retrieve UE context response message carries the RRC release message.

Step 1304b: The serving base station sends the RRC release message to the UE. The RRC release message is used to indicate the terminal device to terminate the SDT.

Step 1305b: The UE stops an SDT timer.

Step 1306b: The serving base station sends a first SDT data packet carried in the RRC resume request message to the anchor base station.

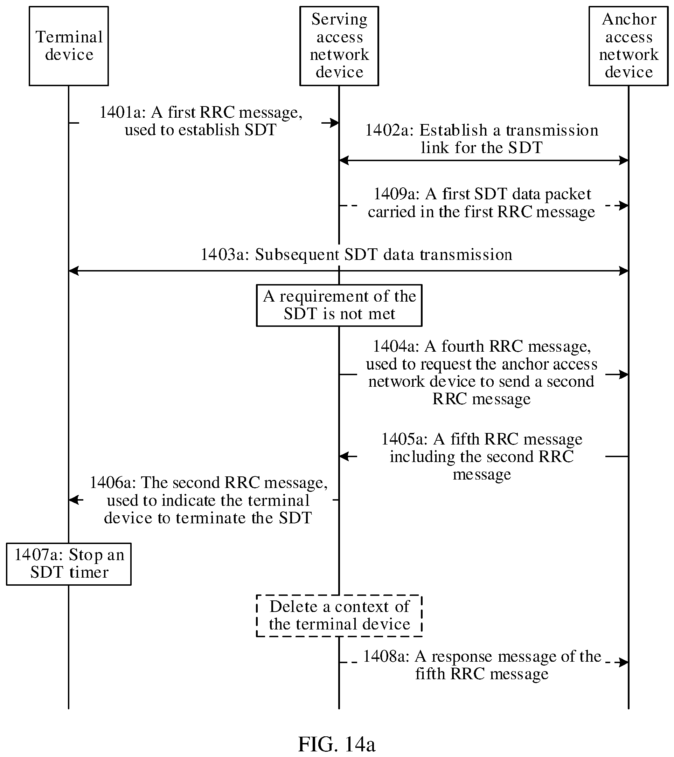

FIG. 14a illustrates a specific implementation of the embodiment shown in FIG. 9 when the serving access network device is different from the anchor access network device and the access network device does not meet the requirement of the SDT in a process of performing the SDT. As shown in FIG. 14a, the method may include the following steps.

Step 1401a: A terminal device sends a first RRC message to a serving access network device. Accordingly, the serving access network device receives the first RRC message from the terminal device. The first RRC message is used to establish SDT. Refer to the related description in step 901. Details are not described herein again.

It should be understood that, when the method shown in FIG. 14a is applied to a scenario in which the access network device does not meet a requirement of the SDT in a process of performing the SDT, it may be considered that the first RRC message successfully triggers the SDT.

Step 1402a: The serving access network device establishes a transmission link for the SDT with an anchor access network device.

It should be understood that when the serving access network device receives the first RRC message, a capability of the serving access network device can meet a requirement for establishing SDT, and the serving access network device may perform signaling interaction with the anchor access network device, to establish the transmission link for the SDT.

Step 1403a: The terminal device performs subsequent SDT data transmission with the anchor access network device.

After the transmission link for the SDT is established, the terminal device may forward a subsequent SDT data packet to the anchor access network device by using the serving access network device, and the anchor access network device sends the SDT data packet to a user plane network element.

Step 1404a: If the serving access network device does not meet the requirement of the SDT, the serving access network device sends a fourth RRC message to the anchor access network device. Accordingly, the anchor access network device receives the fourth RRC message from the serving access network device. The fourth RRC message is used to request the anchor access network device to send a second RRC message.

It can be learned from step 1401a to step 1403a that, before step 1404a, transmission of SDT data has been started. In step 1404a, the serving access network device does not meet the requirement of the SDT in the process of performing the SDT.

Content included in the fourth RRC message in step 1404a may be similar to that included in the fourth RRC message in step 1302a, and a difference is as follows: The fourth RRC message in step 1404a may be an RRC release request (RRCReleaseRequest) message, and the fourth RRC message does not include a first SDT data packet. In the scenario of FIG. 14a, the first SDT data packet is already sent to the anchor access network device after the transmission link for the SDT is established.

Step 1405a: The anchor access network device sends a fifth RRC message to the serving access network device, where the fifth RRC message is a response message of the fourth RRC message, the fifth RRC message includes the second RRC message, and the second RRC message is used to indicate the terminal device to terminate the SDT.

It should be noted that for content of the Fifth RRC message, refer to the related description of the fifth RRC message in step 1303a. Details are not described herein again.

Optionally, if the fourth RRC message is an RRC release request message, the fifth RRC message may be an RRC release response (RRCReleaseResponse) message.

Optionally, the fifth RRC message may be further used to indicate the serving access network device to delete a context of the terminal device. Correspondingly, after receiving the fifth RRC message, the serving access network device may delete the locally stored context of the terminal device.

Step 1406a: The serving access network device sends the second RRC message to the terminal device. Accordingly, the terminal device receives the second RRC message from the serving access network device. The second RRC message is used to indicate the terminal device to terminate the SDT.

It should be understood that after receiving the fifth RRC message, the serving access network device may forward the second RRC message in the fifth RRC message to the terminal device.

Step 1407a: The terminal device stops an SDT timer. Refer to the related description in step 1003a. Details are not described herein again.

Optionally, if the fifth RRC message is not a unidirectional message, after the serving access network device deletes the locally stored context of the terminal device and sends the second RRC message to the terminal device, the method may further include: Step 1408a: The serving access network device sends a response message of the fifth RRC message to the anchor access network device. In a possible implementation, the response message of the fifth RRC message may be an RRC release complete (RRCReleaseComplete) message.

Optionally, if the first RRC message includes the first SDT data packet, after step 1402a, the method may further include: Step 1409a: The serving access network device sends the first SDT data packet to the anchor access network device. For step 1409a, refer to the description in step 1204a. Details are not described herein again.

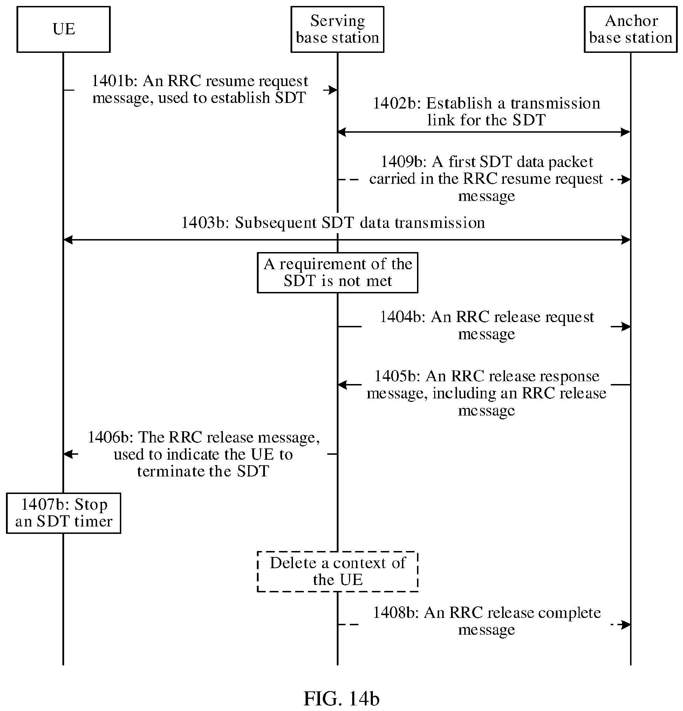

That the terminal device is UE, the access network device is a base station, the first RRC message is an RRC resume request message, the second RRC message is an RRC release message, the fourth RRC message is an RRC release request message, the fifth RRC message is an RRC release response message, and the response message of the fifth RRC message is an RRC release complete message is used as an example to describe again the procedure of the data transmission method shown in FIG. 14a. As shown in FIG. 14b, the data transmission method may include the following steps:
Step 1401b: The UE sends the RRC resume request message to a serving base station. The RRC resume request message is used to request to perform SDT.
Step 1402b: The serving base station establishes a transmission link for the SDT with an anchor base station.
Step 1409b: The serving base station sends a first SDT data packet carried in the RRC resume request message to the anchor base station.
Step 1403b: The UE performs subsequent SDT data transmission with the anchor base station.
Step 1404b: If the serving base station does not meet a requirement of the SDT, the serving base station sends the RRC release request message to the anchor base station.
Step 1405b: The anchor base station sends the RRC release response message to the serving base station. The RRC release response message carries the RRC release message.
Step 1406b: The serving base station sends the RRC release message to the UE. The RRC release message is used to indicate the terminal device to terminate the SDT.
Step 1407b: The UE stops an SDT timer.
Step 1408b: The serving base station sends the RRC release complete message to the anchor base station.

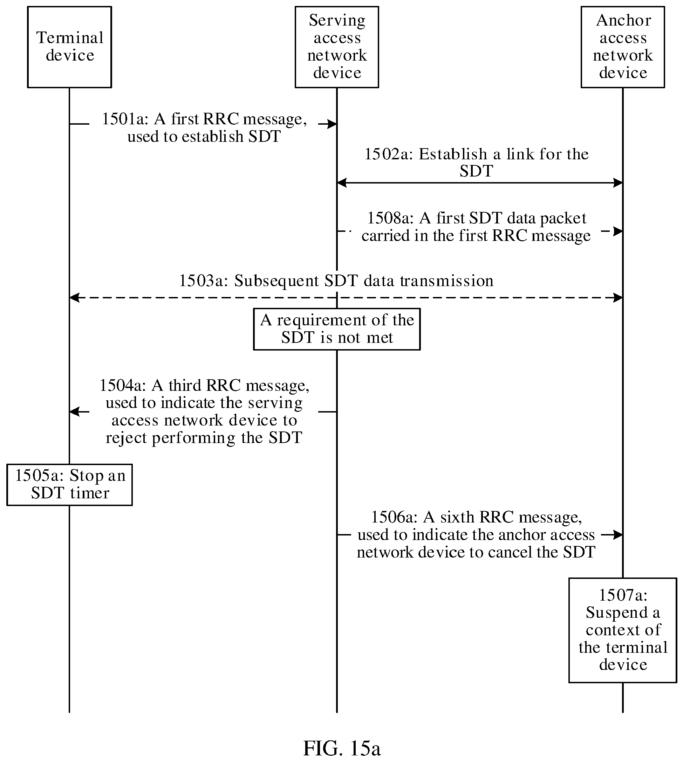

FIG. 15a illustrates another specific implementation of the embodiment shown in FIG. 9 when the serving access network device is different from the anchor access network device and the serving access network device does not meet the requirement of the SDT in a process of performing the SDT. As shown in FIG. 15a, the method may include the following steps.

Step 1501a: A terminal device sends a first RRC message to a serving access network device. Accordingly, the serving access network device receives the first RRC message from the terminal device. The first RRC message is used to establish SDT.

Step 1502a: The serving access network device establishes a transmission link for the SDT with an anchor access network device.

Step 1503a: The terminal device performs subsequent SDT data transmission with the anchor access network device.

For steps 1501a to 1503a, refer to related descriptions in steps 1401a to 1403a. Details are not described herein again.

Step 1504a: If the serving access network device does not meet a requirement of the SDT, the serving access network device sends a third RRC message to the terminal device. Accordingly, the terminal device receives the third RRC message from the serving access network device. The third RRC message is used to indicate the serving access network device to reject performing the SDT.

Step 1505a: The terminal device stops an SDT timer.

For steps 1504a and 1505a, refer to related descriptions in steps 1102a and 1103a. Details are not described herein again.

Step 1506a: The serving access network device sends a sixth RRC message to the anchor access network device. Accordingly, the anchor access network device receives the sixth RRC message from the serving access network device. The sixth RRC message is used to indicate the anchor access network device to cancel subsequent SDT.

Optionally, the sixth RRC message may be referred to as an SDT cancel (SDT cancel) message.

Optionally, the sixth RRC message may further include a second cause value, and the second cause value may be used to indicate a reason for canceling the SDT. For example, if the serving access network device determines to cancel the subsequent SDT due to network congestion, the second cause value may be the network congestion.

Step 1507a: The anchor access network device suspends, based on the sixth RRC message, a context of the terminal device that performs the SDT.

Optionally, if the first RRC message includes a first SDT data packet, after step 1502a, the method may further include: Step 1508a: The serving access network device sends the first SDT data packet to the anchor access network device. For step 1508a, refer to the description in step 1204a. Details are not described herein again.

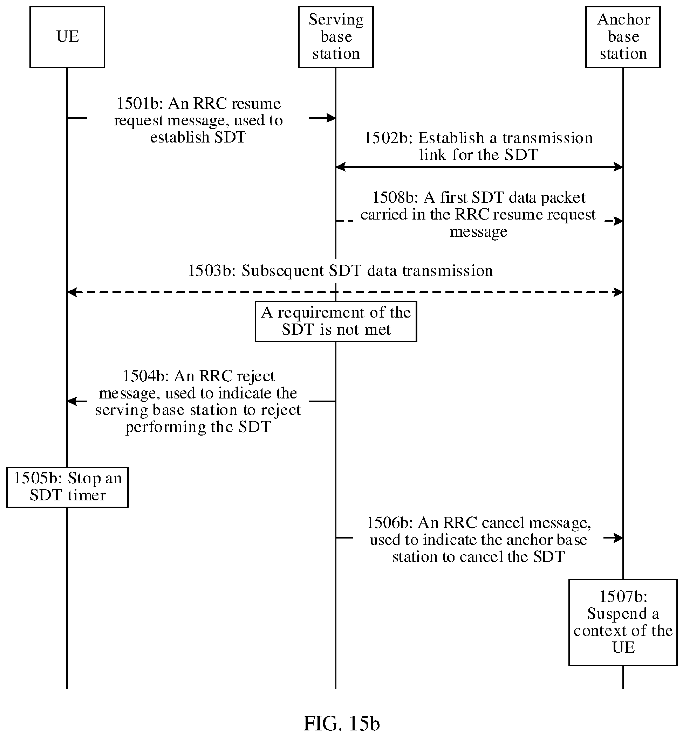

That the terminal device is UE, the access network device is a base station, the first RRC message is an RRC resume request message, the third RRC message is an RRC reject message, and the sixth RRC message is an RRC cancel message is used as an example to describe again the procedure of the data transmission method shown in FIG. 15a. As shown in FIG. 15b, the data transmission method may include the following steps:
Step 1501b: The UE sends the RRC resume request message to a serving base station. The RRC resume request message is used to request to perform SDT.
Step 1502b: The serving base station establishes a transmission link for the SDT with an anchor base station.
Step 1508b: The serving base station sends a first SDT data packet to the anchor base station.
Step 1503b: The UE performs subsequent SDT data transmission with the anchor base station.
Step 1504b: If the serving base station does not meet a requirement of the SDT, the serving base station sends the RRC reject message to the UE. The RRC reject message is used to indicate the serving base station to reject performing the SDT.
Step 1505b: The UE stops an SDT timer.
Step 1506b: The serving base station sends the RRC cancel message to the anchor base station. The RRC cancel message is used to indicate the anchor base station to cancel subsequent SDT.
Step 1507b: The anchor base station suspends, based on the RRC cancel message, a context of the UE that performs the SDT.

It should be noted that the foregoing data transmission methods provided in FIG. 9 to FIG. 15b are all applied to a scenario in which a serving access network device does not meet a requirement of SDT, and termination or rejection of the SDT is triggered by the serving access network device. It should be understood that the anchor access network device may actively terminate the SDT.

Optionally, if the anchor access network device is the same as the serving access network device, a manner in which the anchor access network device actively terminates the SDT may be as follows: sending a second RRC message to the terminal device. In this scenario, a process in which the anchor access network device actively terminates the SDT may be as described in step 1002a and step 1003a, and details are not described again.

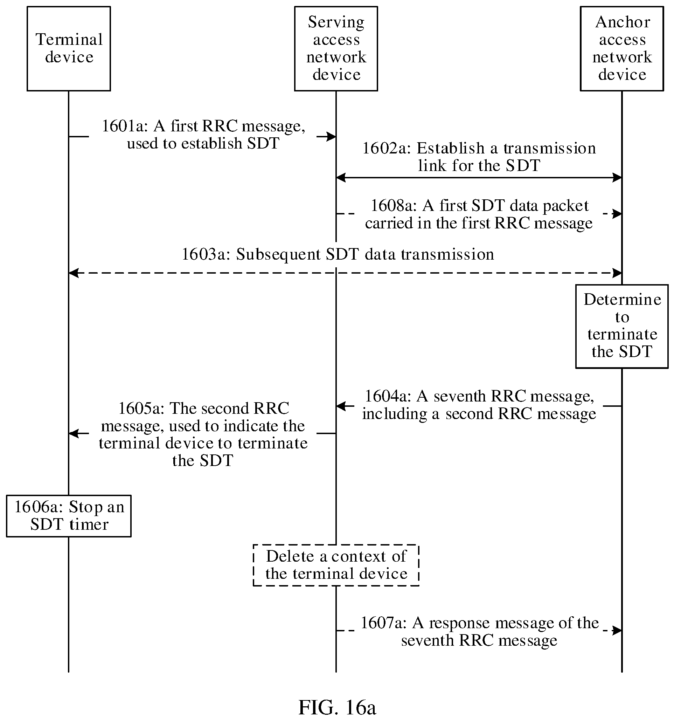

Optionally, if the anchor access network device is different from the serving access network device, the anchor access network device may perform the data transmission method shown in FIG. 16a to actively terminate the SDT. As shown in FIG. 16a, the method may include the following steps.

Step 1601a: A terminal device sends a first RRC message to a serving access network device. Accordingly, the serving access network device receives the first RRC message from the terminal device. The first RRC message is used to establish SDT.

Step 1602a: The serving access network device establishes a transmission link for the SDT with an anchor access network device.

Step 1603a: The terminal device performs subsequent SDT data transmission with the anchor access network device.

For steps 1601a to 1603a, refer to related descriptions in steps 1401a to 1403a. Details are not described herein again.

Step 1604a: If the anchor access network device determines to terminate the SDT in a process of performing the SDT, the anchor access network device sends a seventh RRC message to the serving access network device. Accordingly, the serving access network device receives the seventh RRC message. The seventh RRC message includes a second RRC message, and the second RRC message is used to indicate the terminal device to terminate the SDT.

Optionally, a reason why the anchor access network device determines to terminate the SDT may include but is not limited to: A capability of the anchor access network device does not meet a requirement for subsequently performing the SDT (for example, congestion occurs in an SDT process), or the anchor access network device experiences a timeout when receiving a data packet (for example, after the transmission link for the SDT is established, the anchor access network device does not receive an SDT data packet for a long time).

Optionally, the seventh RRC message may be a context release request message.

Optionally, the seventh RRC message may be further used to indicate the serving access network device to release a context of the terminal device. Correspondingly, after receiving the seventh RRC message, the serving access network device may delete the locally stored context of the terminal device.

For content of the second RRC message, refer to the related description of the second RRC message in step 1002. Details are not described herein again.

Step 1605a: The serving access network device sends the second RRC message to the terminal device. Accordingly, the terminal device receives the second RRC message from the serving access network device. The second RRC message is used to indicate the terminal device to terminate the SDT.

It should be understood that after receiving the seventh RRC message, the serving access network device may forward the second RRC message in the seventh RRC message to the terminal device.

Step 1606a: The terminal device stops an SDT timer. Refer to the related description in step 1003a. Details are not described herein again.

Optionally, if the seventh RRC message is not a unidirectional message, after the serving access network device deletes the locally stored context of the terminal device and sends the second RRC message to the terminal device, the method may further include: Step 1607a: The serving access network device sends a response message of the seventh RRC message to the anchor access network device. In a possible implementation, the response message of the seventh RRC message may be an RRC release complete message.

Optionally, if the first RRC message includes a first SDT data packet, after step 1602a, the method may further include: Step 1608a: The serving access network device sends the first SDT data packet to the anchor access network device. For step 1608a, refer to the description in step 1204a. Details are not described herein again.

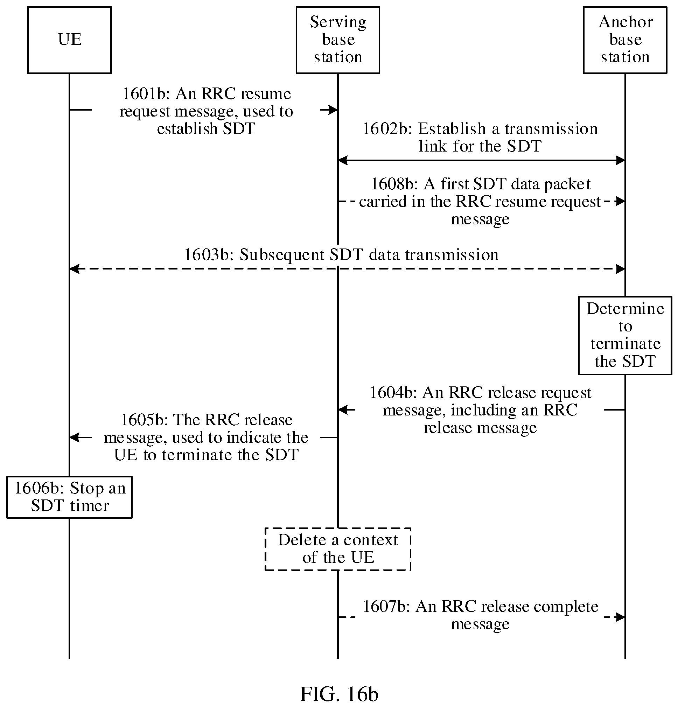

That the terminal device is UE, the access network device is a base station, the first RRC message is an RRC resume request message, the second RRC message is an RRC release message, the seventh RRC message is an RRC release request message, and the response message of the seventh RRC message is an RRC release complete message is used as an example to describe again the procedure of the data transmission method shown in FIG. 16a. As shown in FIG. 16b, the data transmission method may include the following steps:
Step 1601b: The UE sends the RRC resume request message to a serving base station. The RRC resume request message is used to request to perform SDT.
Step 1602b: The serving base station establishes a transmission link for the SDT with an anchor base station.
Step 1608b: The serving base station sends a first SDT data packet to the anchor base station.
Step 1603b: The UE performs subsequent SDT data transmission with the anchor base station.
Step 1604b: If the anchor base station determines to terminate the SDT in a process of performing the SDT, the anchor base station sends the RRC release request message to the serving base station. The RRC release request message includes the RRC release message.
Step 1605b: The serving base station sends the RRC release message to the UE. The RRC release message is used to indicate the UE to terminate the SDT.
Step 1606b: The UE stops an SDT timer.
Step 1607b: The serving base station sends the RRC release complete message to the anchor base station.

It should be noted that the solutions shown in FIG. 16a and FIG. 16b are applied to a scenario in which the anchor access network device determines to terminate an SDT in a process of performing the SDT. In addition, when the serving access network device sends an RRC message to the anchor access network device to request to establish a transmission link for SDT, the anchor access network device may actively determine to terminate the SDT because the anchor access network device does not meet a requirement of the SDT (for example, congestion occurs or load is greater than a threshold). In this case, a procedure in which the anchor access network device actively terminates the SDT includes the foregoing steps 1604a to 1606a. For details, refer to the foregoing related descriptions. Details are not described herein again.

Optionally, in this embodiment of this application, when the serving access network device is different from the anchor access network device, if the anchor access network device terminates the SDT because the anchor access network device does not meet the requirement of the SDT, after terminating the SDT, the anchor access network device may migrate an anchor to switch a core network channel from the anchor access network device to a current serving access network device, and migrate the anchor to the serving access network device, so that the serving access network device becomes an anchor access network device. Based on this solution, SDT may be prevented from being delayed due to a cause of the anchor access network device. After anchor migration, the terminal device may perform SDT with the current serving access network device (also an anchor access network device), to ensure that subsequent SDT is performed smoothly.

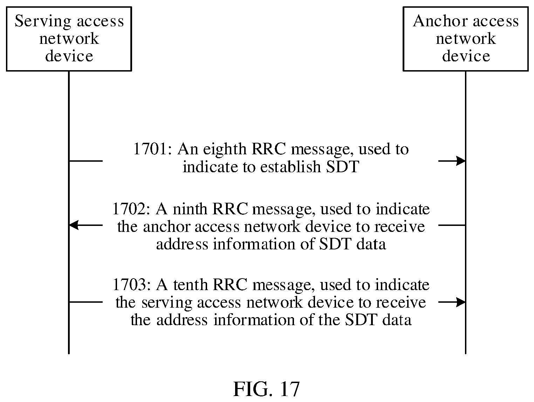

Optionally, after receiving the first RRC message, the serving access network device may perform signaling interaction with the anchor access network device, to establish a transmission link for SDT. As shown in FIG. 17, a procedure of establishing a transmission link for SDT may include the following steps:
Step 1701: A serving access network device sends an eighth RRC message to an anchor access network device. Accordingly, the anchor access network device receives the eighth RRC message from the serving access network device. The eighth RRC message is used to indicate to establish SDT.

Optionally, the eighth RRC message may be a retrieve UE context request message, or may be a message similar to the retrieve UE context request message.

Optionally, the eighth RRC message may include a transmission indication, and the transmission indication is used to indicate a terminal device to request to perform the SDT. For example, the transmission indication may be an SDT indication.

Optionally, the eighth RRC message may further include a MAC locale identifier (MAC locale identifier, MAC LCID) of a media access control (media access control, MAC) layer protocol data unit (protocol data unit, PDU), where the MAC LCID may be a MAC LCID of a first SDT data packet received by the serving access network device, and the MAC LCID may identify an SDT bearer.

Step 1702: The anchor access network device sends a ninth RRC message to the serving access network device. Accordingly, the serving access network device receives the ninth RRC message from the anchor access network device. The ninth RRC message is a response message of the eighth RRC message, and the ninth RRC message is used to indicate the anchor access network device to receive address information of SDT data.

Optionally, the eighth RRC message is a retrieve UE context request message. Correspondingly, the ninth RRC message may be a retrieve UE context response message.

Optionally, the ninth RRC message may include one set and/or a plurality of sets of information element TNL (this information element) addresses for the anchor access network device to receive SDT bearers, where a TNL address includes a transport layer internet (internet protocol, IP) address and a GTP (GPRS tunneling protocol (GPRS tunneling protocol)) tunnel endpoint identifier (tunnel endpoint identifier, TEID) GTP-TEID, and a different TNL address corresponds to a different SDT bearer.

Optionally, the ninth RRC message may further include a part of a UE context. For example, the part of the UE context may include configuration information of a radio link control (radio link control, RLC) layer of one or more sets of SDT bearers, and QoS parameters of one or more sets of SDT bearers. The QoS parameter may include but is not limited to the following information: a 5G QoS identifier (5G QoS identifier, 5G QI), an allocation and retention priority (allocation and retention priority, ARP), a packet delay budget (packet delay budget, PDB), a packet error rate (packet error rate, PER), or a maximum data burst volume.

Optionally, the ninth RRC message may further include a PDU session (session) identifier of the SDT bearer and/or an LCID of the SDT bearer, where the SDT bearer and the LCID are in a one-to-one mapping relationship.

Optionally, the ninth RRC message may further include an indication flag indicating whether the serving access network device is allowed to reject subsequent SDT of the terminal device. In this embodiment of this application, if the indication flag indicates that the serving access network device is allowed to reject the subsequent SDT of the terminal device, in a process of performing SDT, if the serving access network device cannot perform subsequent SDT for some reason, the serving access network device is authorized to directly reject the subsequent SDT by sending a third RRC message. However, if the indication flag indicates that the serving access network device is not allowed to reject the subsequent SDT of the terminal device, in a process of performing SDT, if the serving access network device cannot perform subsequent SDT for some reason, the serving access network device needs to send a fourth RRC message to the anchor access network device, to request the anchor access network device to send the second RRC message to terminate the subsequent SDT.

Step 1703: The serving access network device sends a tenth RRC message to the anchor access network device. Accordingly, the anchor access network device receives the tenth RRC message from the serving access network device. The tenth RRC message is used to indicate the serving access network device to receive the address information of the SDT data.

Optionally, the tenth RRC message may be an Xn address indication message or a message similar to an Xn address indication.

Optionally, the tenth RRC message may include one or more sets of TNL addresses for the serving access network device to receive SDT bearers.

Optionally, if a first RRC message received by the serving access network device includes a first SDT data packet, the serving access network device may carry the first SDT data packet in the tenth RRC message, thereby saving a signaling resource and improving data transmission efficiency.

After the foregoing step 1701 to step 1703, the serving access network device and the anchor access network device successfully establish a transmission link for SDT, so that the terminal device may perform transmission of subsequent SDT data packets with the anchor access network device.

After the transmission link for SDT is established, when receiving uplink data of an SDT bearer, the serving access network device may map an LCID in a MAC packet header of an SDT data packet to a TNL address provided by the anchor access network device, and encapsulate the data packet into a GTP packet and send the GTP packet to the anchor access network device. When downlink data of the SDT bearer is received from the anchor access network device, the downlink data may be forwarded to the terminal device based on the TNL address.

Optionally, the embodiment shown in FIG. 17 may be independently performed, independent of any of the preceding embodiments. Alternatively, the embodiment shown in FIG. 17 may be combined with a previous embodiment to form a new embodiment. For example, a procedure of establishing a transmission link for SDT in the foregoing step 1402a, step 1402b, step 1502a, step 1402b, step 1602a, or step 1602b may be shown in step 1701 to step 1703.

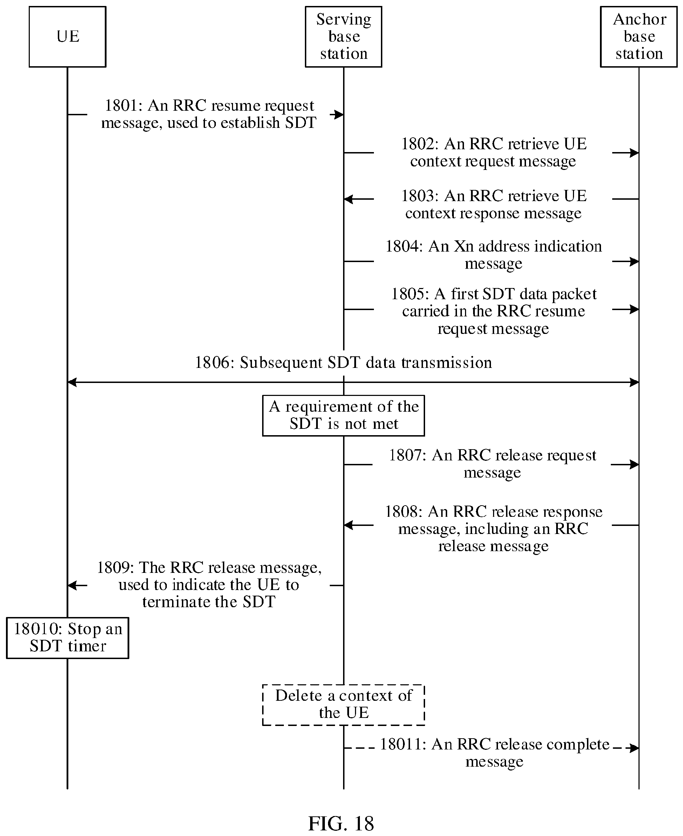

For example, the data transmission method shown in FIG. 14b is used as an example. If step 1402 is implemented by using the procedure shown in step 1701 to step 1703, assuming that the eighth RRC message is a retrieve UE context request message, the ninth RRC message is a retrieve UE context response message, and the tenth RRC message is an Xn address indication message, as shown in FIG. 18, the data transmission method may include the following steps:
Step 1801: UE sends an RRC resume request message to a serving base station. The RRC resume request message is used to request to perform SDT.
Step 1802: The serving base station sends the retrieve UE context request message to an anchor base station. The retrieve UE context request message is used to indicate to perform the SDT.
Step 1803: The anchor base station sends the retrieve UE context response message to the serving base station. The retrieve UE context response message includes address information for the anchor base station to receive SDT data.
Step 1804: The serving base station sends an Xn address indication message to the anchor base station. The Xn address indication message includes address information for the serving base station to receive SDT data.
Step 1805: The serving base station sends a first SDT data packet carried in the RRC resume request message to the anchor base station.
Step 1806: The UE performs subsequent SDT data transmission with the anchor base station.
Step 1807: If the serving base station does not meet a requirement of the SDT, the serving base station sends an RRC release request message to the anchor base station.
Step 1808: The anchor base station sends an RRC release response message to the serving base station. The RRC release response message carries an RRC release message.
Step 1809: The serving base station sends the RRC release message to the UE. The RRC release message is used to indicate the terminal device to terminate the SDT.
Step 18010: The UE stops an SDT timer.
Step 18011: The serving base station sends an RRC release complete message to the anchor base station.

It should be noted that in the foregoing method embodiment, the processor 701 in the communication device 70 shown in FIG. 7 may invoke the application code stored in the memory 704 to instruct the serving access network device to perform the actions of the serving access network device, the processor 701 in the communication device 70 shown in FIG. 7 may invoke the application code stored in the memory 704 to instruct the anchor access network device to perform the actions of the anchor access network device, and the processor 701 in the communication device 70 shown in FIG. 7 may invoke the application code stored in the memory 704 to instruct the terminal device to perform the actions of the terminal device.

It may be understood that, in each of the foregoing embodiments, the methods and/or steps implemented by a target node may alternatively be implemented by a component (for example, a chip or a circuit) that can be used in the target node.

Optionally, an embodiment of this application further provides a communication apparatus, and the communication apparatus is configured to implement the foregoing various methods. The communication apparatus may be the target node in the foregoing method embodiment, or an apparatus including the foregoing target node, or a component usable in the target node. It may be understood that, to implement the foregoing functions, the communication apparatus includes a corresponding hardware structure and/or software module for performing the functions. A person skilled in the art should be easily aware that, in combination with the units and algorithm steps of the examples described in the embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, division into functional modules of the communication apparatus may be performed according to the foregoing method embodiments. For example, the division into the functional modules may be based on corresponding functions, or two or more functions may be integrated into one processing module. The integrated module may be implemented in a form of hardware, or may be implemented in a form of a software functional module. It should be noted that in the embodiments of this application, the module division is an example, and is merely logical function division, and there may be other division manners in actual implementation.

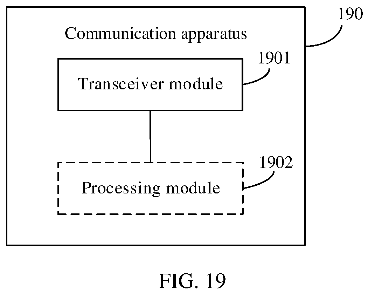

FIG. 19 is a schematic diagram of a structure of a communication apparatus 190. The communication apparatus 190 includes a transceiver module 1901. The transceiver module 1901 may also be referred to as a transceiver unit for implementing transmission and reception functions. For example, the transceiver module may be a transceiver circuit, a transceiver machine, a transceiver, or a communication interface. Optionally, the communication apparatus 190 may further include a processing module 1902.

For example, the communication apparatus 190 is the serving access network device in the foregoing method embodiments.

The transceiver module 1901 may be configured to receive a first RRC message from a terminal device, where the first RRC message is used to establish SDT. If the serving access network device does not meet a requirement of the SDT, the transceiver module 1901 may be further configured to send a second RRC message or a third RRC message to the terminal device, where the second RRC message is used to indicate the terminal device to terminate the SDT, and the third RRC message is used to indicate the serving access network device to reject performing the SDT.

Optionally, the serving access network device is not an anchor access network device. Before sending the second RRC message to the terminal device, the transceiver module 1901 may be further configured to send a fourth RRC message to the anchor access network device, where the fourth RRC message is used to request the anchor access network device to send the second RRC message. In addition, the transceiver module 1901 may be further configured to receive a fifth RRC message from the anchor access network device, where the fifth RRC message is a response message of the fourth RRC message, and the fifth RRC message includes the second RRC message.

Optionally, if it is determined that the serving access network device does not meet the requirement of the SDT in a process of performing the SDT, the fifth RRC message may be further used to indicate the serving access network device to delete a context of the terminal device. The processing module 1902 may be configured to delete the locally stored context of the terminal device.

Optionally, it is determined that the serving access network device does not meet the requirement of the SDT in the process of performing the SDT, and after sending the third RRC message to the terminal device, the transceiver module 1901 may be further configured to send a sixth RRC message to the anchor access network device, where the sixth RRC message is used to indicate the anchor access network device to cancel the SDT.

For example, the communication apparatus 190 is an anchor access network device in the foregoing method embodiments.

The transceiver module 1901 may be configured receive a fourth RRC message from the serving access network device, where the fourth RRC message is used to request the anchor access network device to send a second RRC message. In addition, the transceiver module 1901 may be further configured to send a fifth RRC message to the serving access network device, where the fifth RRC message includes the second RRC message, and the second RRC message is used to indicate the terminal device to terminate the SDT.

Optionally, the fourth RRC message includes any one of the following: a request indication, a redirection indication, or a cell reselection indication, where the request indication is used to request the anchor access network device to send the second RRC message, the redirection indication is used to indicate the serving access network device to recommend the terminal device to perform redirection, and the cell reselection indication is used to indicate the serving access network device to recommend the terminal device to perform cell reselection. The processing module 1902 may be further configured to determine, according to the request indication, the redirection indication, or the cell reselection indication, that the fifth RRC message includes the second RRC message.

Optionally, when the second RRC message includes a first redirection parameter, the fourth RRC message may further include a second redirection parameter. The processing module 1902 may be further configured to determine the first redirection parameter based on the second redirection parameter. When the second RRC message includes a first cell reselection priority parameter, the fourth RRC message may further include a second cell reselection priority parameter. The processing module 1902 may be further configured to determine the first cell reselection priority parameter based on the second cell reselection priority parameter.

Optionally, the fourth RRC message further includes a wait time indication, and the processing module 1902 may be further configured to determine a wait time according to the wait time indication.

Optionally, the fourth RRC message further includes a first SDT data packet. The transceiver module 1901 may be further configured to send the first SDT data packet to a user plane network element.

For example, the communication apparatus 190 is another anchor access network device in the foregoing method embodiments.

The transceiver module 1901 may be configured to receive a sixth RRC message from the serving access network device, where the sixth RRC message is used to indicate the anchor access network device to cancel the SDT. The processing module 1902 may be configured to suspend, based on the sixth RRC message, the context of the terminal device that performs the SDT.

For example, the communication apparatus 190 is still another anchor access network device in the foregoing method embodiments.

The processing module 1902 may be configured to determine to terminate the SDT. The transceiver module 1901 may be configured to send a seventh RRC message to the serving access network device, where the seventh RRC message includes a second RRC message, and the second RRC message is used to indicate the terminal device to terminate the SDT.

For example, the communication apparatus 190 is the terminal device in the foregoing method embodiments.

The transceiver module 1901 may be configured to send a first RRC message to the serving access network device, where the first RRC message is used to establish SDT. The processing module 1902 may be configured to stop an SDT timer when receiving a second RRC message or a third RRC message from the serving access network device. The second RRC message is used to indicate the terminal device to terminate the SDT, and the third RRC message is used to indicate the serving access network device to reject performing the SDT.

Optionally, when receiving the third RRC message, the processing module 1902 may be further configured to notify an upper layer of an SDT failure, and restart an RNA timer, where the RNA timer is used to indicate that the terminal device is in an RRC inactive state.

Optionally, when receiving the second RRC message, the processing module 1902 may be further configured to notify the upper layer an SDT termination.

Optionally, the second RRC message may include a suspend configuration, and the processing module 1902 may be further configured to suspend the context of the terminal device and restart the RNA timer.

Optionally, after the terminal device sends the first RRC message, the processing module 1902 may be further configured to start the SDT timer and pause the RNA timer.

Optionally, if an unsent SDT data packet exists in a buffer of the terminal device, the processing module 1902 may be further configured to ignore the wait time, perform redirection based on the first redirection parameter, and trigger SDT in a first cell to send the unsent SDT data packet in the buffer, where the first cell is a serving cell after the terminal device performs the redirection.

Optionally, if an unsent SDT data packet exists in the buffer of the terminal device, the processing module 1902 may be further configured to ignore the wait time, perform cell reselection based on the first cell reselection priority parameter, and trigger SDT in a second cell to send the unsent SDT data packet in the buffer, where the second cell is a serving cell after cell reselection is performed.

It should be noted that all relevant contents of the steps in the foregoing method embodiments may be cited in function description of a corresponding function module. Details are not described herein. Because the communication apparatus 190 provided in this embodiment can perform the foregoing data transmission method, for a technical effect that can be achieved by the communication apparatus, refer to the foregoing method embodiments. Details are not described herein again.

Optionally, the serving access network device, the anchor access network device, or the terminal device in embodiments of this application may also be referred to as a communication apparatus, which may be a general-purpose device or a dedicated device. This is not specifically limited in the embodiments of this application.

In this embodiment, the communication apparatus 190 is presented by dividing the functional modules through integration. The "module" herein may be a specific ASIC, a circuit, a processor and a memory that execute one or more software or firmware programs, an integrated logic circuit, and/or another component that can provide the foregoing functions. In a simple embodiment, a person skilled in the art may figure out that the communication apparatus 190 may use the form of the communication device 70 shown in FIG. 7.

For example, the processor 701 in the communication device 70 shown in FIG. 7 may invoke the computer-executable instructions stored in the memory 704, to enable the communication device 70 to perform the data transmission method in the foregoing method embodiments.

Specifically, functions/implementation processes of the transceiver module 1901 and the processing module 1902 in FIG. 19 may be implemented by the processor 701 in the communication device 70 shown in FIG. 7 by invoking the computer-executable instructions stored in the memory 704. Alternatively, a function/an implementation process of the processing module 1902 in FIG. 19 may be implemented by the processor 701 in the communication apparatus 70 shown in FIG. 7 by invoking the computer-executable instructions stored in the memory 704, and a function/an implementation process of the transceiver module 1901 in FIG. 19 may be implemented by the communication interface 703 in the communication apparatus 70 shown in FIG. 7.

Because the communication apparatus 190 provided in this embodiment can perform the foregoing data transmission method, for a technical effect that can be achieved by the communication apparatus, refer to the foregoing method embodiments. Details are not described herein again.

It should be understood that sequence numbers of the foregoing processes do not mean execution sequences in various embodiments of this application. The performing sequences of the processes should be determined according to functions and internal logic of the processes, and should not constitute any limitation on the implementation processes of the embodiments of this application.

A person of ordinary skill in the art may be aware that, with reference to the examples described in the embodiments disclosed in this specification, units and algorithm steps may be implemented by electronic hardware or a combination of computer software and electronic hardware. Whether these functions are implemented by hardware or software depends on particular applications and design constraints of the technical solutions. A person skilled in the art may implement the described functions for each particular application by using different methods, but such implementation should not be considered beyond the scope of this application.

A person skilled in the art can clearly understand that for convenience and conciseness of description, for specific working processes of the foregoing systems, devices, and units, reference may be made to the corresponding processes in the foregoing method embodiments. Details are not described herein again.

In the several embodiments provided in this application, it should be understood that the disclosed system, device, and method may be implemented in other manners. For example, the described device embodiment is merely an example. For example, the unit division is merely a logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separated, and the components displayed as units may or may not be physical units, and may be located in one place or may be distributed on a plurality of network units. Some or all units may be selected according to actual needs, to achieve objectives of the solutions of the embodiments.

In addition, the functional units in embodiments of this application may be integrated into one processing unit, or each of the units may exist alone physically, or two or more units are integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The terms "component", "module", "system", and the like used in this application are intended to refer to computer-related entities, and the computer-related entity may be hardware, firmware, a combination of hardware and software, software, or running software. For example, the component may be, but is not limited to: processing running on a processor, a processor, an object, an executable file, a thread in execution, a program, and/or a computer. For example, both an application running on a computing device and the computing device may be components. One or more components may exist in a process and/or a thread in execution, and the components may be located in one computer and/or distributed between two or more computers. In addition, these components can be executed in various computer-readable media on which there are various data structures. These components may communicate in a local and/or remote process manner by using such as based on signals having one or more data packets (for example, data from one component that interacts with another component in a local system or a distributed system and/or interacts with another system by using signals through a network such as the Internet).

This application presents the aspects, embodiments, or features around a system that may include a plurality of devices, components, modules, and the like. It should be understood and appreciated that each system may include additional devices, components, modules, and the like, and/or may not include all of the devices, components, modules, and the like discussed with reference to the accompanying drawings. In addition, a combination of these solutions may be used.

In addition, the term "for example" in embodiments of this application is used to represent an example, an illustration, or a description. Any embodiment or design scheme described as "an example" in this application should not be explained as being more preferred or advantageous than other embodiments or design schemes. Exactly, the use of the term "for example" is intended to present a concept in a specific manner.

In the embodiments of this application, information (information), signal (signal), message (message), and channel (channel) may sometimes be used in a mixed manner. It should be noted that, when differences between them are not emphasized, their meanings are consistent. "of (of)", "corresponding (corresponding, relevant)", and "corresponding (corresponding)" may sometimes be used in a mixed manner, and it should be noted that when differences between them are not emphasized, their meanings are consistent. The terms "system" and "network" may sometimes be used in a mixed manner, and when differences between them are not emphasized, their meanings are consistent. For example, "communication network" is also referred to as "communication system".

The network architecture and the service scenario described in embodiments of this application are intended to more clearly describe the technical solutions of the embodiments of this application. They do not constitute any limitation on the technical solutions provided in the embodiments of this application. A person of ordinary skill in the art may know that with the evolution of the network architecture and the emergence of a new service scenario, the technical solutions provided in embodiments of this application are also applicable to resolve similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, applied to a serving access network device (602), wherein the method comprises:
receiving (901, 1001a, 1101a, 1201a, 1301a) a first radio resource control RRC message from a terminal device (601), wherein the first RRC message is used to establish small data transmission SDT; and
sending (902, 1002a, 1102a, 1202a, 1302a) a second RRC message or a third RRC message to the terminal device (601), wherein the second RRC message is used to indicate the terminal device (601) to terminate the SDT, and the third RRC message is used to indicate the serving access network device (602) to reject performing the SDT; and
wherein the second RRC message or the third RRC message comprises a wait time, and the wait time indicates duration that the terminal device (601) waits before initiating a next communication connection.

2. The method according to claim 1, wherein sending a second RRC message or a third RRC message to the terminal device (601) comprises:
if the serving access network device (602) does not meet a requirement of the SDT, sending the second RRC message or the third RRC message to the terminal device (601);
wherein the serving access network device (602) not meeting a requirement of the SDT comprises:
when the first RRC message is received, the serving access network device (602) does not support the SDT, congestion occurs on the serving access network device (602), or load of the serving access network device (602) is greater than a threshold.

3. The method according to claim 1, wherein sending a second RRC message or a third RRC message to the terminal device (601) comprises:
if the serving access network device (602) does not meet a requirement of the SDT, sending the second RRC message or the third RRC message to the terminal device (601);
wherein the serving access network device (602) not meeting a requirement of the SDT comprises:
in a process of performing the SDT, congestion occurs on the serving access network device (602) or the load of the serving access network device (602) is greater than the threshold.

4. The method according to any one of claims 1 to 3, wherein the second RRC message comprises a first redirection parameter or a first cell reselection priority parameter, the first redirection parameter is used for redirection, and the first cell reselection priority parameter is used for cell reselection.

5. The method according to any one of claims 1 to 4, wherein the serving access network device (602) is not an anchor access network device (603); and before the sending the second RRC message to the terminal device (601), the method further comprises:
sending a fourth RRC message to the anchor access network device (603), wherein the fourth RRC message is used to request the anchor access network device (603) to send the second RRC message; and
receiving a fifth RRC message from the anchor access network device (603), wherein the fifth RRC message is a response message of the fourth RRC message, and the fifth RRC message comprises the second RRC message.

6. The method according to claim 5, wherein the fourth RRC message comprises any one of the following: a request indication, a redirection indication, or a cell reselection indication, wherein the request indication is used to request the anchor access network device (603) to send the second RRC message, the redirection indication is used to indicate the serving access network device (602) to recommend the terminal device (601) to perform redirection, and the cell reselection indication is used to indicate the serving access network device (602) to recommend the terminal device (601) to perform cell reselection.

7. The method according to any one of claims 1 to 3, wherein if the serving access network device (602) does not meet the requirement of the SDT in the process of performing the SDT, after the sending the third RRC message to the terminal device (601), the method further comprises:
sending a sixth RRC message to an anchor access network device (603), wherein the sixth RRC message is used to indicate the anchor access network device (603) to cancel the SDT.

8. A data transmission method, applied to an anchor access network device (603), wherein the method comprises:
receiving (1302a) a fourth radio resource control RRC message from a serving access network device (602), wherein the fourth RRC message is used to request the anchor access network device (603) to send a second RRC message; and
sending (1304a) the second RRC message to the serving access network device (602) according to the fourth RRC message, wherein the second RRC message is used to indicate a terminal device (601) to terminate small data transmission SDT; and
wherein the second RRC message comprises a wait time, and the wait time indicates duration that the terminal device (601) waits before initiating a next communication connection.

9. The method according to claim 8, wherein the fourth RRC message comprises any one of the following: a request indication, a redirection indication, or a cell reselection indication, wherein the request indication is used to request the anchor access network device (603) to send the second RRC message, the redirection indication is used to indicate the serving access network device (602) to recommend the terminal device (601) to perform redirection, and the cell reselection indication is used to indicate the serving access network device (602) to recommend the terminal device (601) to perform cell reselection.

10. The method according to claim 8 or 9, wherein the second RRC message comprises a first redirection parameter or a first cell reselection priority parameter, the first redirection parameter is used by the terminal device (601) to perform redirection, and the first cell reselection priority parameter is used by the terminal device (601) to perform cell reselection.

11. A data transmission method, applied to a terminal device (601), wherein the method comprises:
sending (901, 1001a, 1101a, 1201a, 1301a) a first radio resource control RRC message to a serving access network device (602), wherein the first RRC message is used to establish small data transmission SDT; and
stopping (903, 1003a, 1103a, 1203a, 1305a) an SDT timer when a second RRC message or a third RRC message from the serving access network device (602) is received, wherein the second RRC message is used to indicate the terminal device (601) to terminate the SDT, and the third RRC message is used to indicate the serving access network device (602) to reject performing the SDT; and
wherein the second RRC message or the third RRC message comprises a wait time, and the wait time indicates duration that the terminal device (601) waits before initiating a next communication connection.

12. The method according to claim 11, wherein the second RRC message comprises a first redirection parameter, and the first redirection parameter is used by the terminal device (601) to perform redirection.

13. The method according to claim 12, wherein if there is an unsent SDT data packet in a buffer of the terminal device (601), the method further comprises:
ignoring the wait time, performing redirection based on the first redirection parameter, and triggering SDT in a first cell to send the unsent SDT data packet in the buffer, wherein the first cell is a serving cell after the terminal device (601) performs the redirection.

14. The method according to claim 11, wherein the second RRC message comprises a first cell reselection priority parameter, and the first cell reselection priority parameter is used by the terminal device (601) to perform cell reselection.

15. The method according to claim 14, wherein if there is an unsent SDT data packet in a buffer of the terminal device (601), the method further comprises:
ignoring the wait time, performing cell reselection based on the first cell reselection priority parameter, and triggering SDT in a second cell to send the unsent SDT data packet in the buffer, wherein the second cell is a serving cell after the terminal device (601) performs the cell reselection.

## Patentansprüche

1. Ein Datenübertragungsverfahren, angewendet auf ein bedienendes Zugangsnetzwerkgerät (602), wobei das Verfahren Folgendes umfasst:
Empfangen (901, 1001a, 1101a, 1201a, 1301a) einer ersten Funkressourcensteuerungs-Nachricht (RRC-Nachricht) von einem Endgerät (601), wobei die erste RRC-Nachricht zur Einrichtung einer Small Data Transmission (SDT) verwendet wird; und
Senden (902, 1002a, 1102a, 1202a, 1302a) einer zweiten RRC-Nachricht oder einer dritten RRC-Nachricht an das Endgerät (601), wobei die zweite RRC-Nachricht verwendet wird, um dem Endgerät (601) anzuzeigen, die SDT zu beenden, und die dritte RRC-Nachricht verwendet wird, um anzuzeigen, dass das bedienende Zugangsnetzwerkgerät (602) die Durchführung der SDT ablehnt; und
wobei die zweite RRC-Nachricht oder die dritte RRC-Nachricht eine Wartezeit umfasst, und die Wartezeit die Dauer angibt, die das Endgerät (601) vor dem Einleiten einer nächsten Kommunikationsverbindung wartet.

2. Verfahren nach Anspruch 1, wobei das Senden einer zweiten RRC-Nachricht oder einer dritten RRC-Nachricht an das Endgerät (601) Folgendes umfasst:
Falls das bedienende Zugangsnetzwerkgerät (602) eine Anforderung der SDT nicht erfüllt, Senden der zweiten RRC-Nachricht oder der dritten RRC-Nachricht an das Endgerät (601);
Wobei das Nichterfüllen einer Anforderung der SDT durch das bedienende Zugangsnetzwerkgerät (602) Folgendes umfasst:
Wenn die erste RRC-Nachricht empfangen wird, unterstützt das bedienende Zugangsnetzwerkgerät (602) die SDT nicht, es tritt eine Überlast auf dem bedienenden Zugangsnetzwerkgerät (602) auf oder die Auslastung des bedienenden Zugangsnetzwerkgeräts (602) ist größer als ein Schwellenwert.

3. Verfahren nach Anspruch 1, wobei das Senden einer zweiten RRC-Nachricht oder einer dritten RRC-Nachricht an das Endgerät (601) Folgendes umfasst:
Falls das bedienende Zugangsnetzwerkgerät (602) eine Anforderung der SDT nicht erfüllt, Senden der zweiten RRC-Nachricht oder der dritten RRC-Nachricht an das Endgerät (601);
Wobei das Nichterfüllen einer Anforderung der SDT durch das bedienende Zugangsnetzwerkgerät (602) Folgendes umfasst:
Im Prozess der Durchführung der SDT tritt eine Überlast auf dem bedienenden Zugangsnetzwerkgerät (602) auf oder die Auslastung des bedienenden Zugangsnetzwerkgeräts (602) ist größer als der Schwellenwert.

4. Verfahren nach einem der Ansprüche 1 bis 3, wobei die zweite RRC-Nachricht einen ersten Weiterleitungsparameter oder einen ersten Zellreselektions-Prioritätsparameter umfasst, wobei der erste Weiterleitungsparameter zur Weiterleitung verwendet wird und der erste Zellreselektions-Prioritätsparameter für die Zellreselektion verwendet wird.

5. Verfahren nach einem der Ansprüche 1 bis 4, wobei die dienende Zugangsnetzeinrichtung (602) keine Anker-Zugangsnetzeinrichtung (603) ist; und vor dem Senden der zweiten RRC-Nachricht an die Endgeräteeinrichtung (601) umfasst das Verfahren ferner:
Senden einer vierten RRC-Nachricht an die Anker-Zugangsnetzeinrichtung (603), wobei die vierte RRC-Nachricht dazu dient, die Anker-Zugangsnetzeinrichtung (603) aufzufordern, die zweite RRC-Nachricht zu senden; und
Empfangen einer fünften RRC-Nachricht von der Anker-Zugangsnetzeinrichtung (603), wobei die fünfte RRC-Nachricht eine Antwortnachricht auf die vierte RRC-Nachricht ist und die fünfte RRC-Nachricht die zweite RRC-Nachricht enthält.

6. Verfahren nach Anspruch 5, wobei die vierte RRC-Nachricht einen der folgenden Punkte umfasst: eine Anforderungsanzeige, eine Umleitungsanzeige oder eine Zellreselektionsanzeige, wobei die Anforderungsanzeige dazu verwendet wird, die Anker-Zugangsnetzeinrichtung (603) aufzufordern, die zweite RRC-Nachricht zu senden, die Umleitungsanzeige dazu verwendet wird, die dienende Zugangsnetzeinrichtung (602) anzuzeigen, dass sie dem Endgerät (601) die Durchführung einer Umleitung empfehlen soll, und die Zellreselektionsanzeige dazu verwendet wird, die dienende Zugangsnetzeinrichtung (602) anzuzeigen, dass sie dem Endgerät (601) die Durchführung einer Zellreselektion empfehlen soll.

7. Verfahren nach einem der Ansprüche 1 bis 3, wobei, falls die dienende Zugangsnetzeinrichtung (602) die Anforderung der SDT im Verlauf der Durchführung der SDT nicht erfüllt, nach dem Senden der dritten RRC-Nachricht an das Endgerät (601) das Verfahren ferner umfasst:
Senden einer sechsten RRC-Nachricht an eine Anker-Zugangsnetzeinrichtung (603), wobei die sechste RRC-Nachricht dazu dient, der Anker-Zugangsnetzeinrichtung (603) anzuzeigen, die SDT abzubrechen.

8. Ein Datenübertragungsverfahren, angewendet auf eine Anker-Zugangsnetzeinrichtung (603), wobei das Verfahren Folgendes umfasst:
Empfangen (1302a) einer vierten Radio Resource Control (RRC)-Nachricht von einer dienenden Zugangsnetzeinrichtung (602), wobei die vierte RRC-Nachricht dazu dient, die Anker-Zugangsnetzeinrichtung (603) aufzufordern, eine zweite RRC-Nachricht zu senden; und
Senden (1304a) der zweiten RRC-Nachricht an die dienende Zugangsnetzeinrichtung (602) gemäß der vierten RRC-Nachricht, wobei die zweite RRC-Nachricht dazu dient, einem Endgerät (601) anzuzeigen, die Small Data Transmission SDT zu beenden; und
wobei die zweite RRC-Nachricht eine Wartezeit umfasst, und die Wartezeit gibt die Dauer an, die das Endgerät (601) wartet, bevor eine nächste Kommunikationsverbindung initiiert wird.

9. Verfahren nach Anspruch 8, wobei die vierte RRC-Nachricht eines der folgenden Elemente umfasst: eine Anforderungsanzeige, eine Umleitungsanzeige oder eine Zellreselektionsanzeige, wobei die Anforderungsanzeige verwendet wird, um die Anchor-Zugangsnetzwerkgerät (603) aufzufordern, die zweite RRC-Nachricht zu senden, die Umleitungsanzeige verwendet wird, um das bedienende Zugangsnetzwerkgerät (602) anzuweisen, dem Endgerät (601) eine Umleitung zu empfehlen, und die Zellreselektionsanzeige verwendet wird, um das bedienende Zugangsnetzwerkgerät (602) anzuweisen, dem Endgerät (601) eine Zellreselektion zu empfehlen.

10. Verfahren nach Anspruch 8 oder 9, wobei die zweite RRC-Nachricht einen ersten Umleitungsparameter oder einen ersten Prioritätsparameter für die Zellreselektion umfasst, wobei der erste Umleitungsparameter vom Endgerät (601) zur Durchführung der Umleitung verwendet wird und der erste Prioritätsparameter für die Zellreselektion vom Endgerät (601) zur Durchführung der Zellreselektion verwendet wird.

11. Ein Datenübertragungsverfahren, angewendet auf ein Endgerät (601), wobei das Verfahren Folgendes umfasst:
Senden (901, 1001a, 1101a, 1201a, 1301a) einer ersten Funkressourcensteuerung RRC-Nachricht an ein bedienendes Zugangsnetzwerkgerät (602), wobei die erste RRC-Nachricht zur Einrichtung einer Small Data Transmission SDT verwendet wird; und
Anhalten (903, 1003a, 1103a, 1203a, 1305a) eines SDT-Timers, wenn eine zweite RRC-Nachricht oder eine dritte RRC-Nachricht vom bedienenden Zugangsnetzwerkgerät (602) empfangen wird, wobei die zweite RRC-Nachricht dazu dient, dem Endgerät (601) das Beenden der SDT anzuzeigen, und die dritte RRC-Nachricht verwendet wird, um das bedienende Zugangsnetzwerkgerät (602) anzuweisen, die Durchführung der SDT abzulehnen; und
wobei die zweite oder die dritte RRC-Nachricht eine Wartezeit umfasst, und die Wartezeit die Dauer angibt, die das Endgerät (601) wartet, bevor eine nächste Kommunikationsverbindung initiiert wird.

12. Verfahren nach Anspruch 11, wobei die zweite RRC-Nachricht einen ersten Umleitungsparameter umfasst und der erste Umleitungsparameter vom Endgerät (601) zur Durchführung der Umleitung verwendet wird.

13. Verfahren nach Anspruch 12, wobei, falls sich ein nicht gesendetes SDT-Datenpaket in einem Puffer des Endgeräts (601) befindet, das Verfahren ferner Folgendes umfasst:
Ignorieren der Wartezeit, Durchführen der Umleitung basierend auf dem ersten Umleitungsparameter und Auslösen der SDT in einer ersten Zelle, um das nicht gesendete SDT-Datenpaket im Puffer zu senden, wobei die erste Zelle eine bedienende Zelle ist, nachdem das Endgerät (601) die Umleitung durchgeführt hat.

14. Verfahren nach Anspruch 11, wobei die zweite RRC-Nachricht einen ersten Prioritätsparameter für Zellreselektion umfasst und der erste Prioritätsparameter für Zellreselektion vom Endgerät (601) zur Durchführung der Zellreselektion verwendet wird.

15. Verfahren nach Anspruch 14, wobei, wenn ein nicht gesendetes SDT-Datenpaket in einem Puffer der Endgerätevorrichtung (601) vorhanden ist, das Verfahren weiterhin Folgendes umfasst:
Ignorieren der Wartezeit, Durchführung der Zellreselektion basierend auf dem ersten Zellresektionsprioritätsparameter und Auslösen von SDT in einer zweiten Zelle, um das nicht gesendete SDT-Datenpaket aus dem Puffer zu senden, wobei die zweite Zelle eine Servierzelle nach der Zellreselektion durch die Endgerätevorrichtung (601) ist.

## Revendications

1. Procédé de transmission de données, appliqué à un dispositif d'accès réseau de service (602), ledit procédé comprenant :
recevoir (901, 1001a, 1101a, 1201a, 1301a) un premier message de contrôle des ressources radio RRC provenant d'un dispositif terminal (601), le premier message RRC étant utilisé pour établir une transmission de petites données SDT ; et
envoyer (902, 1002a, 1102a, 1202a, 1302a) un deuxième message RRC ou un troisième message RRC au dispositif terminal (601), le deuxième message RRC étant utilisé pour indiquer au dispositif terminal (601) de terminer la SDT, et le troisième message RRC étant utilisé pour indiquer au dispositif d'accès réseau de service (602) de refuser d'effectuer la SDT ; et
dans lequel le deuxième message RRC ou le troisième message RRC comprend un temps d'attente, et le temps d'attente indique la durée durant laquelle le dispositif terminal (601) attend avant d'initier une prochaine connexion de communication.

2. Procédé selon la revendication 1, dans lequel envoyer un deuxième message RRC ou un troisième message RRC au dispositif terminal (601) comprend :
si le dispositif d'accès réseau de service (602) ne répond pas à une exigence de la SDT, envoyer le deuxième message RRC ou le troisième message RRC au dispositif terminal (601) ;
dans lequel le fait que le dispositif d'accès réseau de service (602) ne réponde pas à une exigence de la SDT comprend :
lorsque le premier message RRC est reçu, le dispositif d'accès réseau de service (602) ne prend pas en charge la SDT, de la congestion se produit sur le dispositif d'accès réseau de service (602), ou la charge du dispositif d'accès réseau de service (602) est supérieure à un seuil.

3. Procédé selon la revendication 1, dans lequel envoyer un deuxième message RRC ou un troisième message RRC au dispositif terminal (601) comprend :
si le dispositif d'accès réseau de service (602) ne répond pas à une exigence de la SDT, envoyer le deuxième message RRC ou le troisième message RRC au dispositif terminal (601) ;
dans lequel le fait que le dispositif d'accès réseau de service (602) ne réponde pas à une exigence de la SDT comprend :
dans un processus d'exécution de la SDT, une congestion se produit sur le dispositif d'accès réseau de service (602) ou la charge du dispositif d'accès réseau de service (602) est supérieure au seuil.

4. Procédé selon l'une quelconque des revendications 1 à 3, dans lequel le deuxième message RRC comprend un premier paramètre de redirection ou un premier paramètre de priorité de resélection de cellule, le premier paramètre de redirection étant utilisé pour la redirection, et le premier paramètre de priorité de resélection de cellule étant utilisé pour la resélection de cellule.

5. Le procédé selon l'une quelconque des revendications 1 à 4, dans lequel le dispositif d'accès réseau de service (602) n'est pas un dispositif d'accès réseau d'ancrage (603) ; et avant l'envoi du deuxième message RRC au dispositif terminal (601), le procédé comprend en outre :
l'envoi d'un quatrième message RRC au dispositif d'accès réseau d'ancrage (603), le quatrième message RRC étant utilisé pour demander au dispositif d'accès réseau d'ancrage (603) d'envoyer le deuxième message RRC ; et
la réception d'un cinquième message RRC du dispositif d'accès réseau d'ancrage (603), le cinquième message RRC étant un message de réponse au quatrième message RRC, et le cinquième message RRC comprenant le deuxième message RRC.

6. Le procédé selon la revendication 5, dans lequel le quatrième message RRC comprend l'un quelconque des éléments suivants : une indication de demande, une indication de redirection ou une indication de resélection de cellule, l'indication de demande servant à demander au dispositif d'accès réseau d'ancrage (603) d'envoyer le deuxième message RRC, l'indication de redirection servant à indiquer au dispositif d'accès réseau de service (602) de recommander au dispositif terminal (601) d'effectuer une redirection, et l'indication de resélection de cellule servant à indiquer au dispositif d'accès réseau de service (602) de recommander au dispositif terminal (601) d'effectuer une resélection de cellule.

7. Le procédé selon l'une quelconque des revendications 1 à 3, dans lequel si le dispositif d'accès réseau de service (602) ne satisfait pas à l'exigence du SDT lors de l'exécution du SDT, après l'envoi du troisième message RRC au dispositif terminal (601), le procédé comprend en outre :
l'envoi d'un sixième message RRC à un dispositif d'accès réseau d'ancrage (603), le sixième message RRC étant utilisé pour indiquer au dispositif d'accès réseau d'ancrage (603) d'annuler le SDT.

8. Un procédé de transmission de données, appliqué à un dispositif d'accès réseau d'ancrage (603), dans lequel le procédé comprend :
la réception (1302a) d'un quatrième message RRC (radio resource control) d'un dispositif d'accès réseau de service (602), le quatrième message RRC étant utilisé pour demander au dispositif d'accès réseau d'ancrage (603) d'envoyer un deuxième message RRC ; et
l'envoi (1304a) du deuxième message RRC au dispositif d'accès réseau de service (602) conformément au quatrième message RRC, le deuxième message RRC étant utilisé pour indiquer à un dispositif terminal (601) de terminer la transmission de petites données SDT ; et
dans lequel le deuxième message RRC comprend un temps d'attente, le temps d'attente indiquant la durée pendant laquelle le dispositif terminal (601) attend avant d'initier une prochaine connexion de communication.

9. Le procédé selon la revendication 8, dans lequel le quatrième message RRC comprend l'un des éléments suivants : une indication de requête, une indication de redirection ou une indication de re-sélection de cellule, où l'indication de requête sert à demander à l'équipement d'accès réseau d'ancrage (603) d'envoyer le deuxième message RRC, l'indication de redirection sert à indiquer à l'équipement d'accès réseau de desserte (602) de recommander à l'équipement terminal (601) d'effectuer une redirection, et l'indication de re-sélection de cellule sert à indiquer à l'équipement d'accès réseau de desserte (602) de recommander à l'équipement terminal (601) d'effectuer une re-sélection de cellule.

10. Le procédé selon la revendication 8 ou 9, dans lequel le deuxième message RRC comprend un premier paramètre de redirection ou un premier paramètre de priorité de re-sélection de cellule, le premier paramètre de redirection étant utilisé par l'équipement terminal (601) pour effectuer une redirection, et le premier paramètre de priorité de re-sélection de cellule étant utilisé par l'équipement terminal (601) pour effectuer une re-sélection de cellule.

11. Procédé de transmission de données, appliqué à un équipement terminal (601), ledit procédé comprenant :
l'envoi (901, 1001a, 1101a, 1201a, 1301a) d'un premier message de contrôle des ressources radio (RRC) à un équipement d'accès réseau de desserte (602), le premier message RRC étant utilisé pour établir une transmission de petites données (SDT) ; et
l'arrêt (903, 1003a, 1103a, 1203a, 1305a) d'un minuteur SDT lors de la réception d'un deuxième message RRC ou d'un troisième message RRC provenant de l'équipement d'accès réseau de desserte (602), le deuxième message RRC servant à indiquer à l'équipement terminal (601) de mettre fin à la SDT, et le troisième message RRC servant à indiquer à l'équipement d'accès réseau de desserte (602) de refuser d'effectuer la SDT ; et
le deuxième message RRC ou le troisième message RRC comprend un temps d'attente, le temps d'attente indiquant la durée pendant laquelle l'équipement terminal (601) attend avant de lancer une prochaine connexion de communication.

12. Le procédé selon la revendication 11, dans lequel le deuxième message RRC comprend un premier paramètre de redirection, et le premier paramètre de redirection est utilisé par l'équipement terminal (601) pour effectuer une redirection.

13. Le procédé selon la revendication 12, dans lequel, si un paquet de données SDT non envoyé est présent dans un tampon de l'équipement terminal (601), le procédé comprend en outre :
ignorer le temps d'attente, effectuer la redirection sur la base du premier paramètre de redirection et déclencher la SDT dans une première cellule afin d'envoyer le paquet de données SDT non envoyé dans le tampon, la première cellule étant une cellule de desserte après la redirection effectuée par l'équipement terminal (601).

14. Le procédé selon la revendication 11, dans lequel le deuxième message RRC comprend un premier paramètre de priorité de re-sélection de cellule, et ce paramètre est utilisé par l'équipement terminal (601) pour effectuer une re-sélection de cellule.

15. Le procédé selon la revendication 14, dans lequel, s'il existe un paquet de données SDT non envoyé dans une mémoire tampon du dispositif terminal (601), le procédé comprend en outre :
ignorer le temps d'attente, effectuer une resélection de cellule sur la base du premier paramètre de priorité de resélection de cellule, et déclencher la SDT dans une seconde cellule pour envoyer le paquet de données SDT non envoyé dans la mémoire tampon, la seconde cellule étant une cellule de desserte après que le dispositif terminal (601) a effectué la resélection de cellule.
